# EUROPEAN PATENT APPLICATION

(11) **EP 4 712 579 A1**
(43) Date of publication of application: **18.03.2026**
(21) Application number: 24814256.4
(22) Date of filing: 21.05.2024
(51) Int. Cl.: H04W 48/18

(54) **COMMUNICATION METHOD AND APPARATUS**

(30) Priority: 02.06.2023 CN 202310651837
(71) Applicant: Huawei Technologies Co., Ltd., Shenzhen, Guangdong 518129 (CN)
(72) Inventor: YIN, Yu, Shenzhen, Guangdong 518129 (CN); JIA, Jianxin, Shenzhen, Guangdong 518129 (CN); XIA, Linjin, Shenzhen, Guangdong 518129 (CN); ZHANG, Xinyi, Shenzhen, Guangdong 518129 (CN)
(74) Representative: Goddar, Heinz J.
(86) International application number: PCT/CN2024/094548
(87) International publication number: WO 2024/245057

(57) **Abstract**

A communication method and apparatus, relating to the field of communication technologies, are provided to reduce network deployment costs and operation costs. The method includes: A first network element in a first network receives, from a terminal device, a message used to request to establish a session, obtains first tunnel information and second tunnel information that correspond to the session of the terminal device, sends the first tunnel information to an access network device accessed by the terminal device, and sends the second tunnel information to a third network element in a second network. The terminal device is located in a service area of the second network, an operator to which the terminal device belongs is the same as an operator to which the first network belongs, the second network provides a service for a terminal device of one or more operators, the access network device is directly connected to the second network element, and the third network element is configured to control the second network element.

## Description

This application claims priority to Chinese Patent Application No. 202310651837.1, filed with the China National Intellectual Property Administration on June 2, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a core network may include a control plane and a user plane. The control plane is responsible for establishing and managing a transmission route of service data, and the user plane is responsible for distributing the user service data based on the transmission route. The control plane and the user plane may be separately deployed.

The continuous development of communication technologies drives emergence of new communication scenarios such as industrial enterprises. These new communication scenarios impose many requirements on communication systems, such as low latency, high reliability, and a need for some data to remain in a campus. A multi-access edge computing (multi-access edge computing, MEC) technology is used to deploy the user plane of the core network close to the campus. Network collaboration can be implemented between the user plane and the control plane of the core network, to provide network services of low latency and high bandwidth.

In the campus, terminal devices may belong to different operators. After an operator deploys a campus network at the campus, only terminal devices belonging to the operator can access the campus network, and terminal devices belonging to another operator cannot access the campus network. If each operator deploys its own campus network at the campus, deployment costs and operation costs are high, making it difficult to implement.

### SUMMARY

Embodiments of this application provide a communication method and apparatus, to reduce network deployment costs and operation costs.

According to a first aspect, an embodiment of this application provides a communication method. An execution body of the method may be a first network element in a first network, or may be a chip, a chip system, or a system on chip of the first network element in the first network. The method includes: receiving, from a terminal device, a message used to request to establish a session, obtaining first tunnel information and second tunnel information that correspond to the session of the terminal device, sending the first tunnel information to an access network device, and sending the second tunnel information to a third network element in a second network, where the terminal device is located in a service area of the second network, an operator to which the terminal device belongs is the same as an operator to which the first network belongs, the second network provides a service for a terminal device of one or more operators, the first tunnel information is used to send data corresponding to the session of the terminal device to a second network element in the second network, the second tunnel information is used to send data corresponding to the session of the terminal device to the access network device accessed by the terminal device, the access network device is directly connected to the second network element, and the third network element is configured to control the second network element.

According to the first aspect, for terminal devices belonging to different operators, when the terminal device is located in the service area of the second network, and the access network device accessed by the terminal device is directly connected to the second network element in the second network, the first network element in the first network may establish a direct tunnel between the access network device accessed by the terminal device and the second network element in the second network, so that the terminal devices of the different operators can transmit data via the second network element in the second network. In addition, the second network in this application may be constructed by one sub-network operator, and does not need to be repeatedly constructed by a plurality of operators. This can reduce network deployment costs and operation costs. In addition, data of the terminal device may be directly transmitted between the access network device and the second network element in the second network, without passing by a network element in the first network. This can reduce network deployment costs and operation costs, and can avoid data bypassing, reduce a delay, and improve communication performance.

In a possible design, the message used to request to establish the session may be replaced with a message used to request to establish a connection, a message used to request to establish a data connection, a message used to request to establish a data transmission path, a message used to request to establish a user plane connection, a message used to request to establish a protocol data network (protocol data network, PDN) connection, a message used to request to establish a bearer, a message used to request to establish a protocol data unit (protocol data unit, PDU) session, a message used to request to establish a quality of service flow (quality of service flow, QoS flow), or the like. This is not limited.

According to the possible design, the first network element may determine, based on any one of the foregoing messages, to establish the session for the terminal device, and further establish the direct tunnel between the access network device accessed by the terminal device and the second network element in the second network.

In a possible design, data may also be referred to as traffic, for example, a voice stream or a video stream.

Optionally, that the first tunnel information is used to send data corresponding to the session to the second network element in the second network may also be referred to as that the first tunnel information is used to send uplink traffic (uplink traffic) to the second network element in the second network.

Optionally, that the second tunnel information is used to send data corresponding to the session to the access network device accessed by the terminal device may also be referred to as that the second tunnel information is used to send downlink traffic (downlink traffic) to the access network device accessed by the terminal device.

In a possible design, the access network device accessed (access) by the terminal device may also be referred to as an access network device on which the terminal device camps (camp), an access network device serving the terminal device, an access network device providing a service for the terminal device, an access network device associated with the terminal device, an access network device on which the terminal device resides, an access network device having a radio resource control (radio resource control, RRC) connection to the terminal device, an access network device from which the terminal device may receive data, an access network device whose signal coverage area covers a location of the terminal device, or the like. This is not limited.

In a possible design, that the access network device is directly connected (directly connect/contact/communicate/forward) to the second network element may also be referred to as that the access network device may directly communicate with the second network element, the access network device may perform direct communication with the second network element, the access network device has a direct connection to the second network element, the access network device communicates with the second network element without using another intermediate network element or device (such as a router or a switch), or the like. This is not limited.

In a possible design, that the third network element is configured to control the second network element may also be described as that the third network element provides a service for the second network element.

In a possible design, the obtaining the first tunnel information that corresponds to the session of the terminal device includes: receiving the first tunnel information from the third network element; and/or the obtaining the second tunnel information that corresponds to the session of the terminal device includes: receiving the second tunnel information from the access network device.

In a possible design, before sending the first tunnel information to the access network device and sending the second tunnel information to the third network element in the second network, the method further includes: obtaining first identification information, where the first identification information indicates that the access network device is directly connected to the second network element.

According to the possible design, the first network element may clearly and accurately determine, based on the obtained first identification information, that the access network device is directly connected to the second network element, send the first tunnel information to the access network device, and send the second tunnel information to the third network element in the second network, to facilitate correct establishment of the direct tunnel between the access network device and the second network element in the second network.

In a possible design, the sending the first tunnel information to the access network device includes: sending the first tunnel information to the access network device based on the first identification information. The sending the second tunnel information to the third network element in the second network includes: sending the second tunnel information to the third network element in the second network based on the first identification information.

In a possible design, the obtaining the first identification information includes: requesting a fourth network element in the first network to discover the third network element; and receiving information about the third network element and the first identification information from the fourth network element, where the fourth network element is configured to manage topology information of the first network.

According to the possible design, the first network element may obtain the first identification information in a discovery process of the third network element, to provide a feasible solution for a manner of obtaining the first identification information.

In a possible design, the sending the second tunnel information to the third network element in the second network includes: sending the second tunnel information to the third network element based on the information about the third network element.

In a possible design, the obtaining the first identification information includes: sending, to the third network element, a message used to request to establish the session of the terminal device, and receiving a response message from the third network element, where the response message includes the first identification information; or obtaining the first identification information based on a local configuration.

According to the possible design, the first network element may obtain the first identification information in a session establishment process, or may obtain the first identification information based on the local configuration, to provide a plurality of feasible solutions for a manner of obtaining the first identification information.

In a possible design, the operator to which the first network belongs is the same as or different from an operator to which the second network belongs.

According to the possible design, regardless of whether the operator to which the first network belongs is the same as the operator to which the second network belongs, each terminal device in the service area of the second network may access the second network via the first network. This can reduce network deployment costs and operating costs, and improve system performance.

According to a second aspect, an embodiment of this application provides a communication method. An execution body of the method may be an access network device, or may be a chip, a chip system, or a system on chip of the access network device. The method includes: receiving first tunnel information from a first network element in a first network, allocating second tunnel information for a session of a terminal device, sending the second tunnel information to the first network element, and sending, based on the first tunnel information, data corresponding to the session of the terminal device, where the first tunnel information is used to send data corresponding to the session of the terminal device to a second network element in a second network, an operator to which the terminal device belongs is the same as an operator to which the first network belongs, the terminal device is located in a service area of the second network, the second network provides a service for a terminal device of one or more operators, the terminal device accesses the access network device, the second tunnel information is used to send data corresponding to the session of the terminal device to the access network device, and the access network device is directly connected to the second network element.

According to the second aspect, for terminal devices belonging to different operators, when the terminal device is located in the service area of the second network, if the access network device accessed by the terminal device is directly connected to the second network element in the second network, a direct tunnel between the access network device accessed by the terminal device and the second network element in the second network may be established, so that the terminal devices of the different operators can transmit data via the second network element in the second network. In addition, the second network in this application may be constructed by one sub-network operator, and does not need to be repeatedly constructed by a plurality of operators. This can reduce network deployment costs and operation costs. In addition, data of the terminal device may be directly transmitted between the access network device and the second network element in the second network, without passing by a network element in the first network. This can reduce network deployment costs and operation costs, and can avoid data bypassing, reduce a delay, and improve communication performance.

In a possible design, the access network device belongs to the second network, and the one or more operators include the operator to which the first network belongs.

In a possible design, the access network device belongs to the first network.

According to a third aspect, an embodiment of this application provides a communication method. An execution body of the method may be a second network element in a second network, or may be a chip, a chip system, or a system on chip of the second network element in the second network. The method includes: receiving, from a third network element, a message used to request the second network element to allocate tunnel information for a session of a terminal device, allocating first tunnel information for the session of the terminal device, sending the first tunnel information to the third network element, receiving second tunnel information from the third network element, and sending, based on the second tunnel information, data corresponding to the session of the terminal device to an access network device accessed by the terminal device, where the third network element belongs to the second network, the terminal device is located in a service area of the second network, the second network provides a service for a terminal device of one or more operators, the first tunnel information is used to send data corresponding to the session of the terminal device to the second network element, and the access network device is directly connected to the second network element.

According to the third aspect, for terminal devices belonging to different operators, when the terminal device is located in the service area of the second network, if the access network device accessed by the terminal device is directly connected to the second network element in the second network, a direct tunnel between the access network device accessed by the terminal device and the second network element in the second network may be established, so that the terminal devices of the different operators can transmit data via the second network element in the second network. In addition, the second network in this application may be constructed by one sub-network operator, and does not need to be repeatedly constructed by a plurality of operators. This can reduce network deployment costs and operation costs. In addition, data of the terminal device may be directly transmitted between the access network device and the second network element in the second network, without passing by a network element in the first network. This can reduce network deployment costs and operation costs, and can avoid data bypassing, reduce a delay, and improve communication performance.

In a possible design, first identification information is sent to the third network element, where the first identification information indicates that the access network device is directly connected to the second network element.

According to the possible design, the second network element in the second network may clearly indicate, via the first identification information, that the access network device is directly connected to the second network element, to facilitate correct establishment of the direct tunnel between the access network device and the second network element.

In a possible design, the first identification information is sent to the third network element via a first message, and the first message is a service registration request message or an association message.

According to the possible design, the second network element in the second network may flexibly send the first identification information to the third network element in a procedure like a service registration procedure, an association establishment procedure, or an association update procedure.

According to a fourth aspect, an embodiment of this application provides a communication method. The method includes: A third network element sends, to a second network element, a message used to request the second network element to allocate tunnel information for a session of a terminal device, the second network element allocates first tunnel information for the session of the terminal device, and sends the first tunnel information to the third network element, the third network element sends second tunnel information to the second network element; and the second network element sends, based on the second tunnel information, data corresponding to the session of the terminal device to an access network device accessed by the terminal device, where the third network element and the second network element belong to a second network, the terminal device is located in a service area of the second network, the second network provides a service for a terminal device of one or more operators, the first tunnel information is used to send data corresponding to the session of the terminal device to the second network element, and the access network device is directly connected to the second network element.

In a possible design, a first network element in a first network sends the second tunnel information to the third network element, and the third network element sends the first tunnel information to the first network element, where an operator to which the terminal device belongs is the same as an operator to which the first network belongs.

In a possible design, the access network device allocates the second tunnel information for the session of the terminal device, and sends the second tunnel information to the first network element in the first network, where the operator to which the terminal device belongs is the same as the operator to which the first network belongs; the first network element sends the first tunnel information to the access network device; and the access network device sends data corresponding to the session of the terminal device to the second network element based on the first tunnel information.

For a technical effect brought by any one of the fourth aspect or the possible designs of the fourth aspect, refer to the technical effect brought by any one of the first aspect or the possible designs of the first aspect to any one of the third aspect or the possible designs of the third aspect. Details are not described again.

According to a fifth aspect, an embodiment of this application provides a communication apparatus. The communication apparatus may be used in the first network element in the first network in the first aspect, to implement a function performed by the first network element. The communication apparatus may be the first network element, or may be a chip, a chip system, a system on chip, or the like of the first network element. The communication apparatus may perform, by hardware or by hardware executing corresponding software, the function performed by the first network element. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module is configured to receive, from a terminal device, a message used to request to establish a session. The processing module is configured to obtain first tunnel information and second tunnel information that correspond to the session of the terminal device. The transceiver module is further configured to send the first tunnel information to an access network device, and is further configured to send the second tunnel information to a third network element in a second network. The terminal device is located in a service area of the second network, an operator to which the terminal device belongs is the same as an operator to which the first network belongs, the second network provides a service for a terminal device of one or more operators, the first tunnel information is used to send data corresponding to the session of the terminal device to a second network element in the second network, the second tunnel information is used to send data corresponding to the session of the terminal device to the access network device accessed by the terminal device, the access network device is directly connected to the second network element, and the third network element is configured to control the second network element.

In a possible design, the transceiver module is specifically configured to receive the first tunnel information from the third network element; and/or the transceiver module is specifically configured to receive the second tunnel information from the access network device.

In a possible design, the processing module is further configured to: before the transceiver module sends the first tunnel information to the access network device and sends the second tunnel information to the third network element in the second network, obtain first identification information, where the first identification information indicates that the access network device is directly connected to the second network element.

In a possible design, the processing module is specifically configured to request, via the transceiver module, a fourth network element in the first network to discover the third network element, and receive, via the transceiver module, information about the third network element and the first identification information from the fourth network element, where the fourth network element is configured to manage topology information of the first network; and the processing module is further configured to send the second tunnel information to the third network element based on the information about the third network element via the transceiver module.

In a possible design, the processing module is specifically configured to send, to the third network element via the transceiver module, a message used to request to establish the session of the terminal device, and receive a response message from the third network element via the transceiver module, where the response message includes the first identification information; or the processing module is specifically configured to obtain the first identification information based on a local configuration.

In a possible design, the operator to which the first network belongs is the same as or different from an operator to which the second network belongs.

For a technical effect brought by any one of the fifth aspect or the possible designs of the fifth aspect, refer to the technical effect brought by any one of the first aspect or the possible designs of the first aspect. Details are not described again.

According to a sixth aspect, an embodiment of this application provides a communication apparatus. The communication apparatus may be used in the access network device in the second aspect, to implement a function performed by the access network device. The communication apparatus may be the access network device, or may be a chip, a chip system, a system on chip, or the like of the access network device. The communication apparatus may perform, by hardware or by hardware executing corresponding software, the function performed by the access network device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module is configured to receive first tunnel information from a first network element in a first network. The processing module is configured to allocate second tunnel information for a session of a terminal device. The transceiver module is further configured to send the second tunnel information to the first network element, and is further configured to send, based on the first tunnel information, data corresponding to the session of the terminal device. The first tunnel information is tunnel information corresponding to the session of the terminal device, an operator to which the terminal device belongs is the same as an operator to which the first network belongs, the terminal device is located in a service area of the second network, the second network provides a service for a terminal device of one or more operators, the terminal device accesses the communication apparatus, the second tunnel information is used to send data corresponding to the session of the terminal device to the communication apparatus, and the communication apparatus is directly connected to the second network element.

In a possible design, the communication apparatus belongs to the second network, and the one or more operators include the operator to which the first network belongs.

For a technical effect brought by any one of the sixth aspect or the possible designs of the sixth aspect, refer to the technical effect brought by any one of the second aspect or the possible designs of the second aspect. Details are not described again.

According to a seventh aspect, an embodiment of this application provides a communication apparatus. The communication apparatus may be used in the second network element in the second network in the third aspect, to implement a function performed by the second network element. The communication apparatus may be the second network element, or may be a chip, a chip system, a system on chip, or the like of the second network element. The communication apparatus may perform, by hardware or by hardware executing corresponding software, the function performed by the second network element. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module is configured to receive, from a third network element, a message used to request the communication apparatus, namely the second network element, to allocate tunnel information for a session of a terminal device. The processing module is configured to allocate first tunnel information for the session of the terminal device. The transceiver module is further configured to send the first tunnel information to the third network element, receive second tunnel information from the third network element, and send, based on the second tunnel information, data corresponding to the session of the terminal device to an access network device accessed by the terminal device. The third network element belongs to the second network, the terminal device is located in a service area of the second network, the second network provides a service for a terminal device of one or more operators, the first tunnel information is used to send data corresponding to the session of the terminal device to the communication apparatus, namely the second network element, and the access network device is directly connected to the communication apparatus, namely the second network element.

In a possible design, the transceiver module is further configured to send first identification information to the third network element, where the first identification information indicates that the access network device is directly connected to the communication apparatus, namely the second network element.

In a possible design, the transceiver module is specifically configured to send the first identification information to the third network element via a first message, where the first message is a service registration request message or an association message.

For a technical effect brought by any one of the seventh aspect or the possible designs of the seventh aspect, refer to the technical effect brought by any one of the third aspect or the possible designs of the third aspect. Details are not described again.

According to an eighth aspect, an embodiment of this application provides a communication apparatus. The communication apparatus includes one or more processors. The one or more processors are configured to run a computer program or instructions. When the one or more processors execute the computer program or instructions, the communication apparatus is enabled to perform the communication method according to any one of the first aspect or the possible designs of the first aspect, perform the communication method according to any one of the second aspect or the possible designs of the second aspect, or perform the communication method according to any one of the third aspect or the possible designs of the third aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In embodiments of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a ninth aspect, an embodiment of this application provides a communication apparatus. The communication apparatus includes an input/output interface and a logic circuit. The input/output interface is configured to input and/or output information. The logic circuit is configured to perform the communication method according to any one of the first aspect or the possible designs of the first aspect, perform the communication method according to any one of the second aspect or the possible designs of the second aspect, or perform the communication method according to any one of the third aspect or the possible designs of the third aspect, and perform processing and/or generate information based on the information.

According to a tenth aspect, an embodiment of this application provides a computer-readable storage medium. The computer-readable storage medium stores computer instructions or a program. When the computer instructions or the program is run on a computer, the communication method according to any one of the first aspect or the possible designs of the first aspect is performed, or the communication method according to any one of the second aspect or the possible designs of the second aspect is performed, or the communication method according to any one of the third aspect or the possible designs of the third aspect is performed.

According to an eleventh aspect, an embodiment of this application provides a computer program product including computer instructions. When the computer program product runs on a computer, the communication method according to any one of the first aspect or the possible designs of the first aspect is performed, or the communication method according to any one of the second aspect or the possible designs of the second aspect is performed, or the communication method according to any one of the third aspect or the possible designs of the third aspect is performed.

According to a twelfth aspect, an embodiment of this application provides a computer program. When the computer program is run on a computer, the communication method according to any one of the first aspect or the possible designs of the first aspect is performed, or the communication method according to any one of the second aspect or the possible designs of the second aspect is performed, or the communication method according to any one of the third aspect or the possible designs of the third aspect is performed.

According to a thirteenth aspect, an embodiment of this application provides a chip, including a processor. The processor is coupled to a memory, the memory is configured to store a program or instructions. When the program or the instructions are executed by the processor, the chip is enabled to perform the communication method according to any one of the first aspect or the possible designs of the first aspect, or perform the communication method according to any one of the second aspect or the possible designs of the second aspect, or perform the communication method according to any one of the third aspect or the possible designs of the third aspect.

For a technical effect brought by any design manner of the eighth aspect to the thirteenth aspect, refer to the technical effect brought by any one of the first aspect or the possible designs of the first aspect, or refer to the technical effect brought by any one of the second aspect or the possible designs of the second aspect, or refer to the technical effect brought by any one of the third aspect or the possible designs of the third aspect.

According to a fourteenth aspect, an embodiment of this application provides a communication system. The communication system may include a third network element in a second network and the communication apparatus according to any one of the seventh aspect or the possible designs of the seventh aspect. The third network element is configured to send, to the communication apparatus, a message used to request the communication apparatus to allocate tunnel information for a session of a terminal device, and receive first tunnel information allocated by the communication apparatus; and is further configured to send second tunnel information to the communication apparatus.

In a possible design, the communication system may further include the communication apparatus according to any one of the fifth aspect or the possible designs of the fifth aspect.

In a possible design, the communication system may further include the communication apparatus according to any one of the sixth aspect or the possible designs of the sixth aspect.

### BRIEF DESCRIPTION OF DRAWINGS

FIG. 1 is a diagram of a network in which a control plane and a user plane of a core network are separately deployed according to an embodiment of this application;
FIG. 2 is a diagram of a network in which a user plane is deployed close to a campus according to an embodiment of this application;
FIG. 3 is a diagram of a communication system according to an embodiment of this application;
FIG. 4 is a diagram of a communication apparatus according to an embodiment of this application;
FIG. 5 is a flowchart of a communication method according to an embodiment of this application;
FIG. 6 is a diagram of a service discovery procedure for a third network element according to an embodiment of this application;
FIG. 7 is a flowchart of a communication method according to an embodiment of this application;
FIG. 8 is a flowchart of a communication method according to an embodiment of this application;
FIG. 9 is a diagram of a deployment configuration procedure of a second network according to an embodiment of this application;
FIG. 10 is a flowchart of a communication method according to an embodiment of this application;
FIG. 11A and FIG. 11B are a diagram of a session establishment procedure of a terminal device according to an embodiment of this application;
FIG. 12A and FIG. 12B are a diagram of a session establishment procedure of a terminal device according to an embodiment of this application;
FIG. 13 is a diagram of composition of a communication apparatus according to an embodiment of this application; and
FIG. 14 is a diagram of a chip system according to an embodiment of this application.

### DESCRIPTION OF EMBODIMENTS

A core network may include a control plane (control plane, CP) and a user plane (user plane, UP). The control plane is responsible for establishing and managing a transmission route of service data, and the user plane is responsible for distributing the user service data based on the transmission route. The control plane and the user plane may be deployed separately, so that the user plane may be free from a "centralization" constraint, and a more flexible deployment manner is used. For example, the user plane may be deployed in the core network, or may be deployed in a radio access network closer to the user.

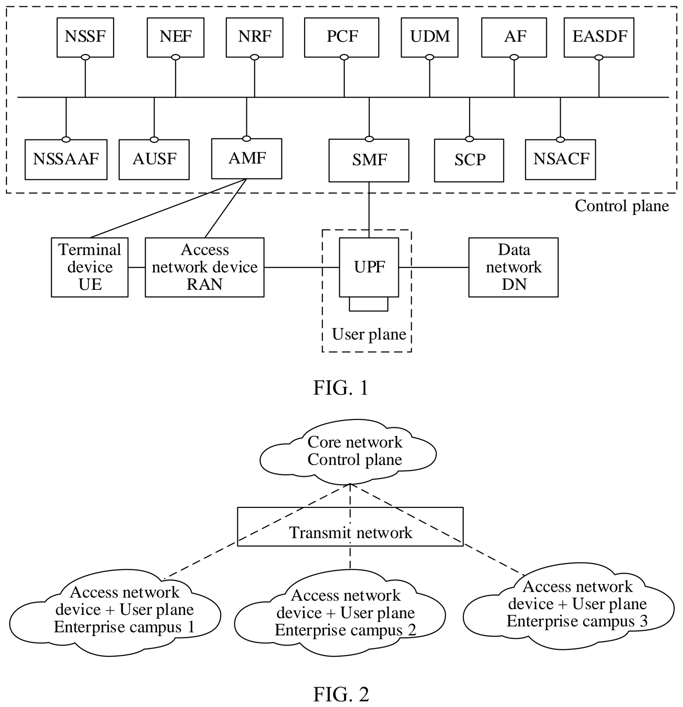

For example, FIG. 1 is a diagram of a network architecture in which a control plane is separated from a user plane. As shown in FIG. 1, a communication system may include a terminal device, an access network device, a core network, and a data network. The control plane of the core network may include function network elements such as a network slice selection function (network slice selection function, NSSF), a network exposure function (network exposure function, NEF), a network repository function (network repository function, NRF), a policy control function (policy control function, PCF), a unified data management (unified data management, UDM), an application function (application function, AF), an edge application server discovery function (edge application server discovery function, EASDF), a network slice selection authentication and authorization function (network slice specific authentication and authorization function, NSSAAF), an authentication service function (authentication server function, AUSF), an access and mobility management function (access and mobility management function, AMF), a session management function (session management function, SMF), a service communication proxy (service communication proxy, SCP), a network slice admission control function (network slice admission control function, NSACF), and the like. The user plane of the core network may include function network elements (or referred to as network elements, network functions (network function, NF), or the like, which is not limited), such as a user plane function (user plane function, UPF).

The continuous development of communication technologies drives emergence of new communication scenarios such as industrial enterprises. In the communication scenarios such as the industrial enterprises, large-traffic services are mainly generated and terminated locally, and no data is sent out. To meet this requirement, a multi-access edge computing (multi-access edge computing, MEC) technology shown in FIG. 2 may be used to deploy a user plane of a core network close to a campus. Network collaboration can be implemented between the user plane and a control plane of the core network, to provide sub-network services of low latency and high bandwidth.

Terminal devices in the campus may belong to different operators. After an operator deploys a campus network at the campus, terminal devices belonging to the operator can access the campus network, but terminal devices belonging to another operator cannot access the campus network. In other words, the campus network deployed by using the MEC technology cannot meet a requirement of terminal devices of different operators for accessing the campus network at the same time, that is, the campus network cannot serve terminal devices of a plurality of operators at the same time.

In addition, in consideration of factors such as equipment room conditions, cabling conditions, and construction, operation, and maintenance costs, independent deployment of a campus network for each operator in the campus results in high network deployment and operation costs and is difficult to implement.

In addition, in FIG. 2, a core network of an operator and a campus network deployed in an enterprise campus belong to different network routes, and the operator needs to deploy a dedicated cable or configure a virtual private network (virtual private network, VPN) between a control plane function network element (like an SMF or an NRF) of the core network and a user plane function network element (like a UPF) of the campus network. This causes a long network provisioning time and high operating expense (operating expense, OPEX) costs. In addition, the campus network needs to synchronize, to the core network, topology information during initial deployment and network topology information updated during subsequent maintenance, or operation personnel need to configure network topology information of the campus network on the core network. A network topology and data of the core network and a network topology and data of the campus network cannot be isolated. As a result, network deployment and maintenance are time- and labor-consuming, and OPEX costs are high.

In conclusion, during campus network deployment, how to enable a campus network to simultaneously serve terminal devices belonging to different operators, reduce network deployment costs and operation costs, and improve communication performance becomes a technical problem to be urgently resolved.

To resolve the foregoing technical problem, an embodiment of this application provides a communication method. In the method, a first network element in a first network may receive, from a terminal device, a message used to request to establish a session, obtain first tunnel information and second tunnel information that correspond to the session of the terminal device, send the first tunnel information to an access network device accessed by the terminal device, and send the second tunnel information to a third network element in a second network. The terminal device is located in a service area of the second network, an operator to which the terminal device belongs is the same as an operator to which the first network belongs, the second network provides a service for a terminal device of one or more operators, the first tunnel information is used to send data corresponding to the session of the terminal device to a second network element in the second network, the second tunnel information is used to send data corresponding to the session of the terminal device to the access network device accessed by the terminal device, the access network device is directly connected to the second network element, and the third network element is configured to control the second network element.

In this embodiment of this application, for terminal devices belonging to different operators, when the terminal device is located in the service area of the second network, and the access network device accessed by the terminal device is directly connected to the second network element in the second network, the first network element in the first network may establish a direct tunnel between the access network device accessed by the terminal device and the second network element in the second network, so that the terminal devices of the different operators can transmit data via the second network element in the second network. In addition, the second network in this application may be constructed by one sub-network operator, and does not need to be repeatedly constructed by a plurality of operators. This can reduce network deployment costs and operation costs. In addition, data of the terminal device may be directly transmitted between the access network device and the second network element in the second network, without passing by a network element in the first network. This can reduce network deployment costs and operation costs, and can avoid data bypassing, reduce a delay, and improve communication performance.

The following describes implementations of embodiments of this application in detail with reference to accompanying drawings in this specification.

The communication method provided in embodiments of this application may be applied to any communication system. The communication system may be a third generation partnership project (third generation partnership project, 3GPP) communication system, for example, a long term evolution (long term evolution, LTE) system, or may be a 5G mobile communication system, a new radio (new radio, NR) communication system, or a new radio vehicle to everything (vehicle to everything, V2X) system. The communication method may also be applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, an internet of things (internet of things, IoT), and another next generation communication system, for example, a future communication system like 5.5G, 6G, and 7G. Alternatively, the communication system may be a non-3GPP communication system. This is not limited.

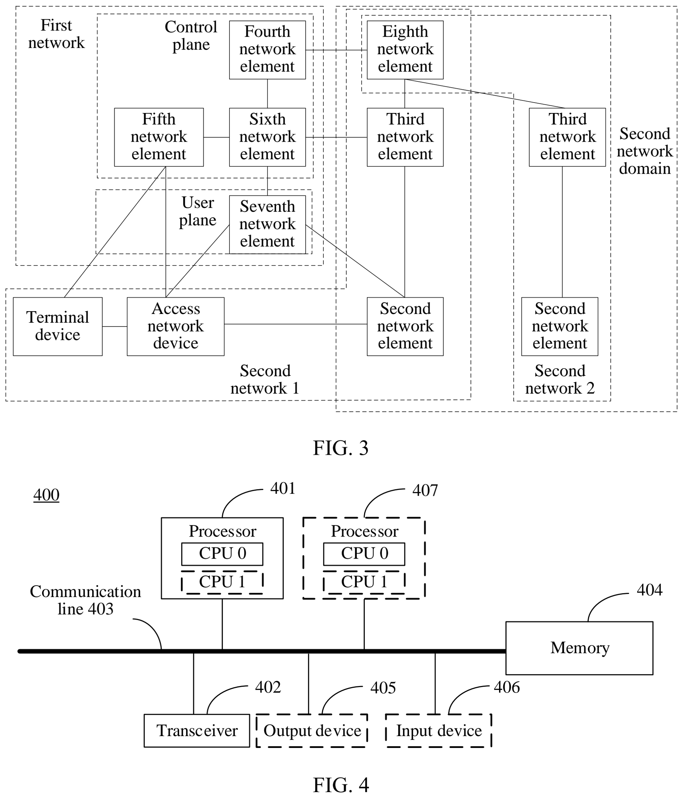

The following uses FIG. 3 as an example to describe a communication system provided in an embodiment of this application.

FIG. 3 is a diagram of a communication system according to an embodiment of this application. As shown in FIG. 3, the communication system may include a first network and a second network domain, the second network domain may include one or more second networks, the second network may include one or more data networks, the second network may provide a service for a terminal device of one or more operators (in other words, the second network supports an open access for terminal devices of a plurality of operators), and the second network domain and/or the second network may interact or be connected to one or more first networks, the second network may further share a basic network resource of one or more first networks.

The first network is a network deployed by an operator, may also be referred to as a large network, and may be understood as a network used and accessed by a terminal device daily. An operator may provide a network service for each terminal device through the large network at a granularity of terminal devices.

A name of the large network may include a network identifier (identifier, ID) and an operator ID. The network ID is used to distinguish different large networks belonging to a same operator, and the operator ID may indicate a public land mobile network (public land mobile network, PLMN) to distinguish networks of different operators. For example, the operator ID may include a mobile country code (mobile country code, MCC) and a mobile network code (mobile network code, MNC), and the MNC may be an ID set by an operator for a large network. A name of the large network is, for example, a data network name (data network name, DNN) of the large network.

The second network may be a network that provides a customized service in a specified location area (for example, an enterprise, a campus, a shopping mall, a park, or the like), or may be referred to as a sub-network, a dedicated network, a distributed sub-network, or the like. This is not limited.

Different from a large network that provides a network service for a terminal device, a sub-network may provide a customized service for a terminal device in a service area, in other words, an operator may provide, at a granularity of sub-networks, a same customized service for each terminal device that subscribes to the sub-network. A service area of a sub-network may be referred to as a sub-network campus.

For example, a sub-network deployed in an enterprise campus is used as an example. After subscribing to an enterprise, a terminal device may access the sub-network after entering the enterprise campus, or may access the sub-network via a VPN when the terminal device is outside the enterprise campus. The sub-network deployed in the enterprise campus is also referred to as an enterprise intranet.

A sub-network name (sub-network name, SNN) may include a network ID and an operator ID. The network ID may be used to distinguish different sub-networks belonging to a same operator, and the operator ID may indicate a PLMN to distinguish sub-network spaces of different operators. For example, the operator ID may include an MCC and an MNC, and the MNC may be an ID set by a sub-network operator for a sub-network.

The second network domain may also be referred to as a sub-network space (sub-network space, SNS), a distributed sub-network space, or the like, and may include one or more sub-networks.

The second network domain may be a sub-network space deployed by an operator, or the second network domain may be a sub-network space deployed by an operator of the sub-network space (sub-network operator, SNO). This is not limited.

Optionally, the SNO may be a company specially responsible for constructing a sub-network space, or may be a subsidiary of an operator. This is not limited.

Optionally, the operator ID in the sub-network name may be used to identify the SNS. In other words, for a plurality of sub-networks in one SNS, the plurality of sub-networks may have a same operator ID, and the plurality of sub-networks may be distinguished based on network IDs.

An operator to which the first network belongs may be the same as an operator to which the second network belongs, or an operator to which the first network belongs may be different from an operator to which the second network belongs. This is not limited.

Optionally, the sub-network and the large network may correspond to different network domains, in other words, the sub-network and the large network may correspond to different service areas.

For example, as shown in FIG. 3, the first network may include one or more fourth network elements, one or more fifth network elements, one or more sixth network elements, one or more seventh network elements, and the like. This is not limited.

The fourth network element may be configured to manage topology information of the first network, and may be further configured to store information about a network element in the first network, and support one network element in discovering another network element that meets a condition. For example, the fourth network element may be a topology management network element (or referred to as a first topology management (topology management, TM) network element) in the first network. For example, the fourth network element may be a network repository function (network repository function, NRF) network element or a domain name server (domain name server, DNS).

The information about the network element may also be referred to as profile (profile) information, service information, instance information, device information, or the like. The information about the network element may include one or more of a network element name, a network element identifier, a network element type, an internet protocol (internet protocol, IP) address/fully qualified domain name (fully qualified domain name, FQDN), port information, a service range (like a tracking area identity list or a service area identity list), a supported DNN/SNN, and a supported slice.

The DNN/SNN supported by the network element may also be described as follows: The network element may serve a network identified by the DNN/SNN, and the network element may serve a network element, a terminal device, an access network device, or the like in the network identified by the DNN/SNN. This is not limited.

The fifth network element is mainly responsible for work such as access authentication and mobility management of the terminal device, signaling exchange between function network elements, and termination of non-access stratum (non-access stratum, NAS) signaling security. For example, the fifth network element may manage a registration status, a reachability status, access authentication and authorization, a connection status, registration and network access, tracking area update, cell handover user authentication, key security, and the like of the terminal device, or the fifth network element may exchange signaling with the terminal device or the access network device. For example, the fifth network element may be a mobility management network element in the first network. For example, the fifth network element may be an AMF.

The sixth network element mainly provides work such as session management (for example, session establishment, modification, and release), IP address allocation and management, and user plane network element selection and control for a session of the terminal device. For example, the sixth network element may be a session management network element in the first network. For example, the sixth network element may be an SMF.

Optionally, the fifth network element and/or the sixth network element may also be referred to as a control network element in the first network (or referred to as a first network element, a first control network element, a control plane network element in the first network, a first control plane network element, or the like).

The seventh network element may be referred to as a session anchor, may be used as an anchor on a user plane transmission logical channel, and is mainly configured to complete functions such as routing and forwarding of user plane data, for example, establishing a channel (that is, the user plane transmission logical channel) with the terminal device, forwarding a data packet between the terminal device and a data network on the channel, and being responsible for data packet filtering, data forwarding, rate control, and charging information generation for the terminal device. For example, the seventh network element may be a user plane network element (or referred to as a first user plane network element) in the first network. For example, the seventh network element may be a UPF.

Optionally, the first network may include a control plane and a user plane. The control plane may include the fourth network element, the fifth network element, and the sixth network element, and the user plane may include the seventh network element.

For example, as shown in FIG. 3, the second network domain may include one or more eighth network elements, one or more third network elements, one or more second network elements, and the like. This is not limited.

The eighth network element may be configured to manage topology information of the second network, for example, may be configured to store information about a network element (for example, the third network element or the second network element) in the second network, and support a network element in service discovery for another network element that meets a condition. For example, the eighth network element may be a topology management network element in the second network (or referred to as a second topology management network element or a topology management network element in the second network domain). For example, the eighth network element may be an NRF, a DNS, or a sub-network space topology management (sub-network space topology management, SNS-TM) network element.

For descriptions of the information about the network element, refer to related descriptions of the information about the network element in the first network. Details are not described again.

Optionally, one or more eighth network elements may be deployed in the second network domain. One eighth network element may manage one or more other eighth network elements. One eighth network element may report, to the other eighth network elements, information about one or more third network elements (or may be referred to as service information of the third network element, profile information of the third network element, device information of the third network element, or the like) associated with the one eighth network element. The eighth network elements may be deployed at different levels (levels) to facilitate network management and maintenance.

Optionally, when there are a plurality of eighth network elements in the second network domain, the plurality of eighth network elements may not be all open to the first network. For example, a part of the eighth network elements is selected (for example, one eighth network element is selected) to be open to the first network to facilitate maintenance and reduce operation costs.

The third network element may provide a control plane function (such as a session management function or an access management function) for one or more second networks in the second network domain, may further manage information about the one or more second network elements (or may control the second network element or provide a service for the second network element), and may further register an SNN supported by the second network element as the information about the third network element with the eighth network element. The SNN supported by the second network element may also mean that the second network element serves a network identified by the SNN. The second network element serves a network element, a terminal device, an access network device, or the like in the network identified by the SNN. This is not limited.

Optionally, the third network element may be deployed in a service area of the second network (that is, the third network element may be separately deployed in a service area of one or more second networks), or may be deployed outside a service area of the second network, or may be deployed in an area center of service areas of a plurality of second networks (that is, the third network element may simultaneously serve one or more second networks), or the like. This is not limited. For example, the third network element may be a control network element (or referred to as a second control network element) in the second network. For example, the third network element may be a sub-network agent (sub-network agent, SNA).

The second network element may provide a user plane function (for example, a function of a user plane network element) for the second network. At least one second network element may be deployed in a service area of each second network. For example, the second network element may be a user plane network element in the second network. For example, the second network element may be a sub-network user plane function (sub-network UPF, SNU) network element.

Based on the foregoing descriptions of the first network and the second network domain, construction, operation, and maintenance of the second network are standard operation procedures (standard operation procedure, SOP), and ownership of the first network and the second network may be decoupled from an operator. This implements batch replication. In addition, a network element that can provide a control plane function and a user plane function is deployed in the second network domain, so that independent topology management and maintenance in the second network can be implemented, both network topology information generated during initial deployment of the second network and network topology information updated during subsequent maintenance can be managed and maintained by the network element in the second network, and the first network does not need to change network deployment and modify a configuration, thereby implementing decoupling between the first network and the second network, implementing data isolation, improving data security, and reducing OPEX costs.

As shown in FIG. 3, the communication system may further include a terminal device and an access network device.

The terminal device may be located in a beam/cell coverage area of the access network device, and the access network device may provide a communication service for the terminal device.

An operator to which the terminal device belongs is the same as the operator to which the first network belongs. When the operator to which the second network belongs is the same as the operator to which the first network belongs, the operator to which the terminal device belongs is the same as the operator to which the second network belongs. When the operator to which the second network belongs is different from the operator to which the first network belongs, the operator to which the terminal device belongs is different from the operator to which the second network belongs.

The access network device may be an access network device of the first network (that is, an operator to which the access network device belongs is the same as the operator to which the first network belongs, or the access network device is deployed by the operator to which the first network belongs), or the access network device may be an access network device of the second network.

When the access network device is an access network device of the second network, the access network device may be associated with one operator (for example, the operator to which the second network belongs), or the access network device may be an access network device shared by a plurality of operators. One or more operators associated with the one or more terminal devices for which the second network provide the service may include the operator to which the first network belongs.

Optionally, the access network device may be located in the service area of the second network. When the terminal device is located in the service area of the second network, the access network device may provide a communication service for the terminal device.

Optionally, a connection between the access network device and the second network element may be established, that is, the access network device is directly connected to the second network element, so that the access network device can directly communicate with the second network element. Alternatively, a connection between the access network device and the seventh network element may be established, and a connection between the seventh network element and the second network element may be established, so that the access network device may communicate with the second network element via the seventh network element (in this case, the access network device is not directly connected to the second network element).

The terminal device in FIG. 3 may be a device having a wireless transceiver function or a chip or a chip system that can be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

Specifically, the terminal device in FIG. 3 may be a mobile phone (mobile phone), a tablet computer, or a computer having a wireless transceiver function. Alternatively, the terminal device may be a user station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, a processing device connected to a wireless modem, a vehicle-mounted device, a wearable device, a terminal device in internet of things, household appliance, a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, a terminal device in a future network, or a terminal device in a future evolved PLMN. This is not limited.

The access network device in FIG. 3 may be any device that is deployed in an access network and that can perform wireless communication with the terminal device, or may be a chip or a chip system that may be disposed in the foregoing device, or may be a logical node or a logical module or a function implemented in a software manner, and may be configured to implement functions such as a radio physical control function, resource scheduling and radio resource management, radio access control, and mobility management. Specifically, the network device may be a device supporting wired access, or may be a device supporting wireless access.

For example, the access network device may include one or more access network (access network, AN)/radio access network (radio access network, RAN) nodes. The AN/RAN node may be a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like.

In still another example, the access network device may be a device including a central unit (central unit, CU) node, a distributed unit (distributed unit, DU) node, or a CU node and a DU node. For example, the access network device may be divided into a CU and a DU from a perspective of logical functions. Some protocol layer functions are centrally controlled by the CU, and a part or all of the remaining protocol layer functions are distributed in the DU, and the CU centrally controls the DU. Further, the central unit CU may be further divided into a control plane (CU-CP) and a user plane (CU-UP). In different systems, a CU (including a CU-CP or a CU-UP) or a DU may have different names. For example, in an open radio access network (open radio access network, O-RAN) system, the CU may also be referred to as an open CU (open CU, O-CU), the DU may also be referred to as an open DU (open DU, O-DU), the CU-CP may also be referred to as an open CU-CP (open CU-CP, O-CU-CP), and the CU-UP may also be referred to as an open CU-UP (open CU-UP, O-CU-UP).

It should be noted that in embodiments of this application, each network element in the first network, each network element in the second network, the terminal device, and the access network device may be one or more chips, or may be a system on chip (system on chip, SoC), or the like. FIG. 3 is merely an example figure, and a quantity of devices included in FIG. 3 is not limited. Names of the devices and links in FIG. 3 are not limited. In addition to the names shown in FIG. 3, the devices and the links may further have other names. This is not limited.

Further, in addition to the devices shown in FIG. 3, the first network and/or the second network domain may further include another device, for example, a function network element related to the control plane shown in FIG. 1. This is not limited.

During specific implementation, the network elements in the first network, the network elements in the second network domain, the terminal device, and the access network device shown in FIG. 3 may all use a composition structure shown in FIG. 4, or include components shown in FIG. 4. FIG. 4 is a diagram of composition of a communication apparatus 400 according to an embodiment of this application. The communication apparatus 400 may be network elements in a first network, or a chip or a system on chip in the network elements in the first network; or may be network elements in a second network domain, or a chip or a system on chip in the network elements in the second network domain; or may be a terminal device, or a chip or a system on chip in the terminal device; or may be an access network device, or a chip or a system on chip in the access network device. As shown in FIG. 4, the communication apparatus 400 includes a processor 401, a transceiver 402, and a communication line 403.

Further, the communication apparatus 400 may include a memory 404. The processor 401, the memory 404, and the transceiver 402 may be connected through the communication line 403.

The processor 401 is a central processing unit (central processing unit, CPU), a general purpose processor, a network processor (network processor, NP), a digital signal processor (digital signal processor, DSP), a microprocessor, a microcontroller, a programmable logic device (programmable logic device, PLD), or any combination thereof. Alternatively, the processor 401 may be another apparatus having a processing function, for example, a circuit, a device, or a software module. This is not limited.

The transceiver 402 is configured to communicate with another device or another communication network. The another communication network may be an Ethernet, a radio access network (radio access network, RAN), a wireless local area network (wireless local area network, WLAN), or the like. The transceiver 402 may be a module, a circuit, a transceiver, or any apparatus that can implement communication.

The communication line 403 is configured to transmit information between the components included in the communication apparatus 400.

The memory 404 is configured to store instructions. The instructions may be computer programs.

The memory 404 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 404 may be independent of the processor 401, or may be integrated into the processor 401. The memory 404 may be configured to store instructions, program code, some data, or the like. The memory 404 may be located inside the communication apparatus 400, or may be located outside the communication apparatus 400. This is not limited. The processor 401 is configured to execute the instructions stored in the memory 404, to implement communication methods provided in the following embodiments of this application.

In an example, the processor 401 may include one or more CPUs, for example, a CPU 0 and a CPU 1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and an input device 406. For example, the input device 406 is a keyboard, a mouse, a microphone, a joystick, or another device, and the output device 405 is a display, a speaker (speaker), or another device.

It should be noted that the communication apparatus 400 may be a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the communication apparatus. In addition to the parts shown in FIG. 4, the communication apparatus may include more or fewer components than those shown in the figure, or some components may be combined, or different component arrangements may be used.

In embodiments of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

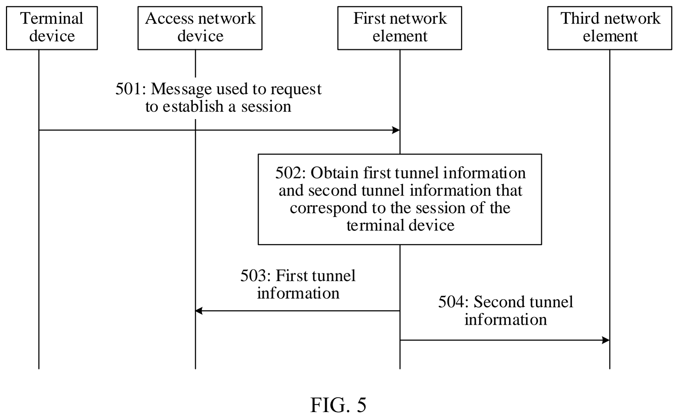

With reference to FIG. 5, a communication method according to an embodiment of this application is described in combination with the communication system shown in FIG. 3. Each network element in a first network, each network element in a second network domain, a terminal device, and an access network device in the following embodiments may have components shown in FIG. 4. Processing performed by a single execution body (each network element in the first network, each network element in the second network domain, the terminal device, or the access network device) shown in embodiments of this application may also be performed by a plurality of execution bodies. These execution bodies may be logically and/or physically separated. This is not limited.

FIG. 5 is a flowchart of a communication method according to an embodiment of this application. The method may be applied to a communication scenario in which an access network device is directly connected to a second network element. As shown in FIG. 5, the method may include the following steps.

Step 501: A terminal device sends, to a first network element in a first network, a message used to request to establish a session; and correspondingly, the first network element in the first network receives, from the terminal device, the message used to request to establish the session.

When being located in a service area of a second network, the terminal device may send, to the first network element, the message used to request to establish the session.

For example, the session may be a protocol data unit (protocol data unit, PDU) session.

The first network element may be a sixth network element in the first network, or may be a fifth network element in the first network, or may be a network element that has functions or some functions of the sixth network element and the fifth network element in the first network.

Optionally, the message that is sent by the terminal device to the first network element and that is used to request to establish the session may include a service area identity (service area ID, SAI).

For example, when moving into a service area (or a fence) of the second network, the terminal device may obtain an SAI from a cell broadcast of an access network device located in the service area of the second network, and use, to carry the SAI, the message (or referred to as a session establishment request) that is sent to the first network element and that is used to request to establish the session, to ensure that the terminal device requests to access the second network in the service area of the second network.

Optionally, the first network element may determine, based on the SAI, an SNN corresponding to the SAI from subscription data, and then perform the following step 502.

Optionally, the first network element may obtain the subscription data from a network storage network element (such as a UDM).

Optionally, an SNN corresponding to the SAI may be locally configured on the first network element.

Alternatively, the message used to request to establish the session may be replaced with a message used to request to establish a connection, a message used to request to establish a data connection, a message used to request to establish a data transmission path, a message used to request to establish a user plane connection, a message used to request to establish a PDN connection, a message used to request to establish a bearer, a message used to request to establish a PDU session, a message used to request to establish a QoS flow, or the like. This is not limited.

The first network element may determine, based on any one of the foregoing messages, to establish the session for the terminal device, and further establish, according to the method shown in FIG. 5, a direct tunnel between an access network device accessed by the terminal device and a second network element in the second network.

Optionally, when sending, to the first network element in the first network, the message used to request to establish the session, the terminal device may directly send the message to the first network element, for example, send the message to the first network element via a NAS message, or may send the message to the first network element via the access network device. This is not limited.

Step 502: The first network element obtains first tunnel information and second tunnel information that correspond to the session of the terminal device.

The first tunnel information may be used to send data corresponding to the session of the terminal device to the second network element in the second network. The second tunnel information may be used to send data corresponding to the session of the terminal device to the access network device accessed by the terminal device. The access network device is directly connected to the second network element.

Optionally, the data may also be referred to as traffic, for example, a voice stream or a video stream.

Optionally, that the first tunnel information is used to send data corresponding to the session to the second network element in the second network may also be referred to as that the first tunnel information is used to send uplink traffic (uplink traffic) to the second network element in the second network.

Optionally, that the second tunnel information is used to send data corresponding to the session to the access network device accessed by the terminal device may also be referred to as that the second tunnel information is used to send downlink traffic (downlink traffic) to the access network device accessed by the terminal device.

Optionally, the access network device accessed (access) by the terminal device may also be referred to as an access network device on which the terminal device camps (camp), an access network device serving the terminal device, an access network device providing a service for the terminal device, an access network device associated with the terminal device, an access network device on which the terminal device resides, an access network device having an RRC connection to the terminal device, an access network device from which the terminal device may receive data, an access network device whose signal coverage area covers a location of the terminal device, or the like. This is not limited.

Optionally, that the access network device is directly connected (directly connect/contact/communicate/forward) to the second network element may also be referred to as that the access network device may directly communicate with the second network element, the access network device may perform direct communication with the second network element, the access network device has a direct connection to the second network element, the access network device communicates with the second network element without using another intermediate network element or device (such as a router or a switch), or the like. This is not limited.

In a possible design, the first network element may receive the first tunnel information from a third network element.

When determining, based on the SNN, that it is the second network domain, the first network element may request a fourth network element in the first network to discover (or request a service discovery for) a third network element supporting the SNN in the second network domain.

The third network element supporting the SNN may also be referred to as a third network element serving a network identified by the SNN. The third network element may serve a network element, a terminal device, an access network device, or the like in the network identified by the SNN. This is not limited.

For example, the first network element may send, to the fourth network element, a service discovery request carrying the SNN. The fourth network element may discover, via an eighth network element based on the service discovery request carrying the SNN, a third network element supporting the SNN, obtain information about the third network element supporting the SNN, use a service discovery response to carry the obtained information about the third network element, and send the service discovery response to the first network element.

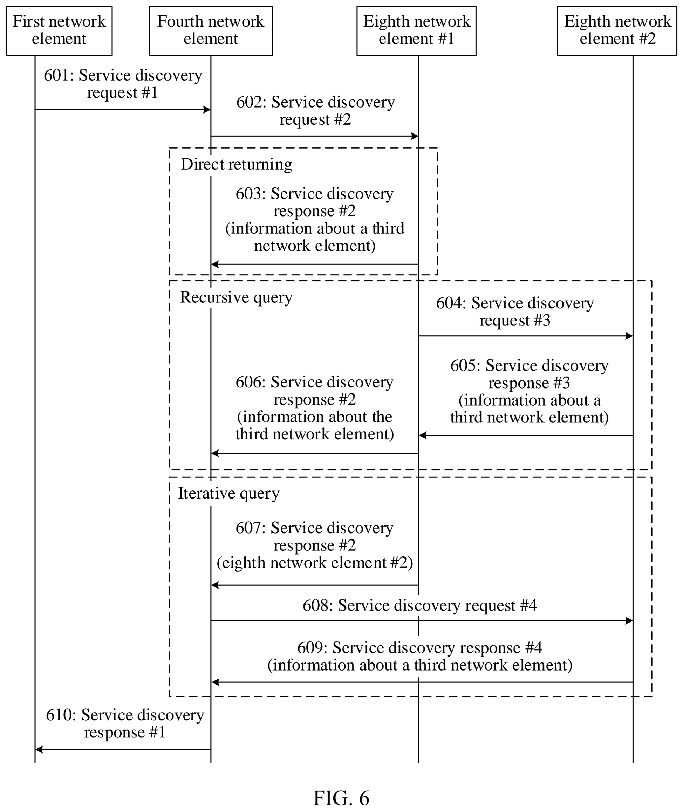

For detailed descriptions of discovering, by the fourth network element via the eighth network element, the third network element supporting the SNN, refer to the following method shown in FIG. 6. Details are not described herein again.

After the first network element discovers the third network element according to the method shown in FIG. 6, the first network element may send, to the third network element, a request (or referred to as a session establishment request) used to request to establish the session for the terminal device.

The session establishment request may include the SNN and session information (or referred to as PDU session information).

For example, the session information may include one or more of the following: identification information of the terminal device, a session identifier (for example, a PDU session identifier), location information of the terminal device, a policy subscribed by the terminal device in the first network, and the like. This is not limited.

For example, the identification information of the terminal device may be identification information that may identify the terminal device, such as a subscription permanent identifier (subscription permanent identifier, SUPI). This is not limited.

The first network element may obtain, from a unified data management (UDM) network element, and/or a policy control (PCF) network element, and/or a network element having a UDM function and/or a PCF function, and/or a local configuration, the policy subscribed by the terminal device in the first network.

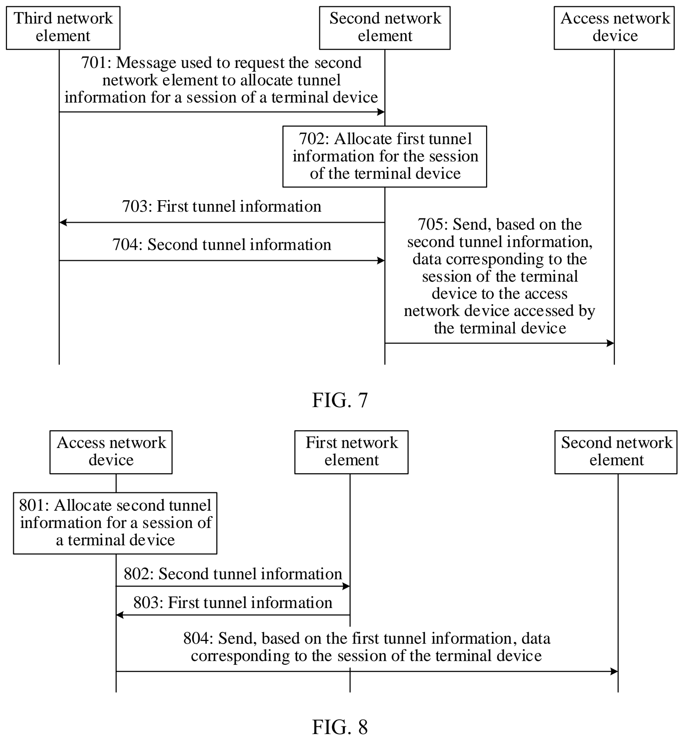

As shown in the following step 701 to step 703 in FIG. 7, the third network element may request, based on the request that is sent by the first network element and that is used to request to establish the session for the terminal device, the second network element to allocate tunnel information for the session of the terminal device, to send the tunnel information allocated by the second network element to the first network element.

Step 701: The third network element sends, to the second network element, a message used to request the second network element to allocate tunnel information for the session of the terminal device; and correspondingly, the second network element receives, from the third network element, the message used to request the second network element to allocate the tunnel information for the session of the terminal device.

The third network element may select, based on the SNN in the request that is sent by the first network element and that is used to request to establish the session for the terminal device, the second network element supporting the SNN, and send, to the second network element, the message used to request the second network element to allocate the tunnel information for the session of the terminal device.

Optionally, the third network element may select the second network element based on one or more of the following information: slice information, user location information, an interface capability of the second network element, and the like. This is not limited.

Optionally, the third network element may use a session establishment request to carry the message used to request the second network element to allocate the tunnel information for the session of the terminal device.

Optionally, the third network element may create a session context based on the request that is sent by the first network element and that is used to request to establish the session for the terminal device, and may select, based on the SNN in the request, the second network element supporting the SNN, and send the session establishment request to the second network element.

Step 702: The second network element allocates the first tunnel information for the session of the terminal device.

Step 703: The second network element sends the first tunnel information to the third network element.

Optionally, the second network element may use a session establishment response to carry the first tunnel information and send the session establishment response to the third network element, and the third network element sends, to the first network element, the session establishment response carrying the first tunnel information.

In a possible design, the first network element may receive the second tunnel information from the access network device.

As shown in step 801 to step 802 in FIG. 8, the access network device may allocate the second tunnel information for the session of the terminal device, and send the second tunnel information to the first network element.

Optionally, the first network element may send a session establishment request (for example, a PDU session resource setup request (PDU session resource setup request)) to the access network device, to request the access network device to allocate tunnel information for the session of the terminal device. The access network device may allocate the second tunnel information for the session of the terminal device based on the session establishment request, use a session establishment response (for example, a PDU session resource setup response) to carry the second tunnel information, and send the session establishment response to the first network element.

Optionally, the access network device may send, to the terminal device, a message indicating an accept of the session establishment request of the terminal device.

In step 502, after obtaining the first tunnel information and the second tunnel information according to the methods shown in FIG. 7 and FIG. 8, the first network element may perform the following step 503 and step 504.

Step 503: The first network element sends the first tunnel information to the access network device, and correspondingly, the access network device receives the first tunnel information from the first network element.

Optionally, an execution sequence of step 503 and step 801 is not limited in embodiments of this application. Step 503 may be performed before step 801, or step 801 may be performed before step 503, or step 801 and step 503 may be performed at the same time. This is not limited.

Optionally, the first network element may use the session establishment request to carry the first tunnel information and send the session establishment request to the access network device.

Optionally, the first network element may further send identification information of the second network or identification information of the second network domain to the access network device, so that the access network device may transmit data of the terminal device to the second network/second network domain instead of another network based on the identification information of the second network/second network domain, thereby implementing separation/isolation between the second network/second network domain and the another network, and ensuring that the data of the terminal device can be correctly transmitted.

For example, when the access network device is connected to a seventh network element in the first network and the second network element in the second network, the first network and the second network may allocate a same IP address to the terminal device. The access network device may send the data of the terminal device to the second network element in the second network based on the IP address of the terminal device, the first tunnel information, and the identification information of the second network.

The identification information of the second network/second network domain may be routing domain information (for example, SNN) of the second network/second network domain, or may be network instance (network instance) information of the second network/second network domain. This is not limited.

Optionally, as shown in step 803 and step 804 in FIG. 8, the access network device may send, based on the first tunnel information, data corresponding to the session of the terminal device. Specifically, the access network device may send data corresponding to the session of the terminal device to the second network element based on the first tunnel information.

Step 504: The first network element sends the second tunnel information to the third network element in the second network, and correspondingly, the third network element receives the second tunnel information from the first network element.

That the third network element may control the second network element is alternatively described as that the third network element may provide a service for the second network element.

Optionally, the first network element may request a session update from the third network element, and the first network element may use a session update request to carry the second tunnel information and send the session update request to the third network element.

Optionally, in this embodiment of this application, the session update request may be Nsmf_ PDUSession _UpdateSMContext Request, Nsmf_PDUSession _Update Request, or the like. This is not limited.

Optionally, as shown in step 704 in FIG. 7, the third network element may send the second tunnel information to the second network element.

Optionally, the third network element may send the session update request to the second network element, and the session update request may include the second tunnel information. The third network element may further send a session update response to the first network element.

Optionally, as shown in step 705 in FIG. 7, the second network element may send, based on the second tunnel information, data corresponding to the session of the terminal device to the access network device accessed by the terminal device.

Optionally, an execution sequence of step 704 and step 701 to step 703 is not limited in embodiments of this application. Step 701 to step 703 may be performed first, and then step 704 is performed; or step 704 may be performed first, and then step 701 to step 703 are performed; or step 701 to step 703 and step 704 may be performed at the same time. This is not limited.

Optionally, different from step 504 in which the first network element sends the second tunnel information to the third network element, the first network element may also directly send the second tunnel information to the second network element.

Optionally, different from step 502 to step 504 in which the first network element obtains the first tunnel information and the second tunnel information, the access network device sends data corresponding to the session of the terminal device to the second network element based on the first tunnel information, and the second network element sends data corresponding to the session of the terminal device to the access network device based on the second tunnel information, the first network element may alternatively obtain only the first tunnel information and send the first tunnel information to the access network device, and the access network device sends data corresponding to the session of the terminal device to the second network element based on the first tunnel information. Alternatively, the first network element may obtain only the second tunnel information and send the second tunnel information to the second network element, and the second network element sends data corresponding to the session of the terminal device to the access network device based on the second tunnel information. This is not limited.

According to the foregoing method, for terminal devices belonging to different operators, when the terminal device is located in the service area of the second network, and the access network device accessed by the terminal device is directly connected to the second network element in the second network, the first network element in the first network may establish a direct tunnel between the access network device accessed by the terminal device and the second network element in the second network, so that the terminal devices of the different operators can transmit data via the second network element in the second network. In addition, the second network in this application may be constructed by one sub-network operator, and does not need to be repeatedly constructed by a plurality of operators. This can reduce network deployment costs and operation costs. In addition, the data of the terminal device may be directly transmitted between the access network device and the second network element in the second network, and no tunnel needs to be established between the network element in the first network, the access network device and the seventh network element in the first network, and the seventh network element in the first network and the second network element in the second network. This can reduce network deployment costs and operation costs, and can avoid data bypassing, reduce a delay, and improve communication performance.

Optionally, before step 503 and step 504, the first network element may determine, when obtaining first identification information, that the access network device is directly connected to the second network element, send the first tunnel information to the access network device based on the first identification information, and send the second tunnel information to the third network element based on the first identification information.

The first identification information may indicate that the access network device is directly connected to the second network element.

For example, the first network element may obtain the first identification information by using any one or more of the following three possible designs:

In a first possible design, the first network element may obtain the first identification information during service discovery for the third network element.

For example, the first network element may send the service discovery request to the fourth network element, where the service discovery request may carry the SNN. The fourth network element may request, based on the service discovery request, a service discovery from the eighth network element for the third network element supporting the SNN, obtain information about the third network element supporting the SNN and the first identification information, use the service discovery response to carry the obtained information about the third network element and the first identification information, and send the service discovery response to the first network element.

In embodiments of this application, the service discovery request and the service discovery response may alternatively be replaced with other names. This is not limited.

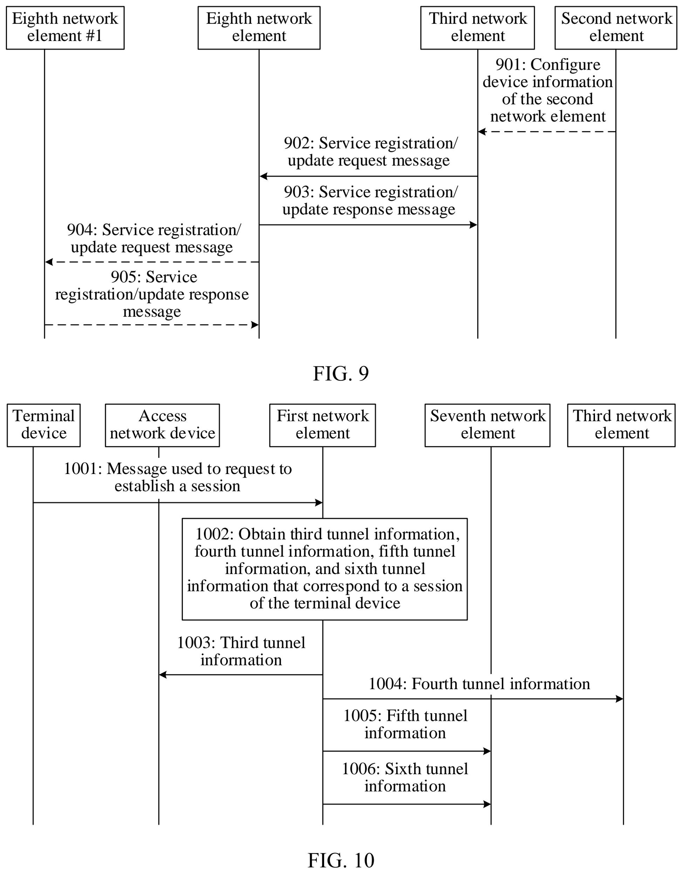

In a first example, the eighth network element or the third network element may obtain the first identification information according to a diagram of a deployment configuration procedure of the second network shown in FIG. 9.

FIG. 9 is a diagram of a deployment configuration procedure of a second network according to an embodiment of this application. As shown in FIG. 9, the method may include the following steps.

Step 901: When a second network element is added to the second network, configure information (or referred to as device information, profile information, service information, or the like) about the second network element on a third network element.

The information about the second network element includes first identification information, and the first identification information indicates whether the second network element is directly connected to an access network device. Optionally, the information about the second network element includes capability information of the second network element, and the capability information includes the first identification information, to indicate that the second network element is directly connected to the access network device.

Optionally, the information about the second network element may further include one or more of the following: identification information, address information, a supported slice, a supported SNN, and the like of the second network element. This is not limited.

Optionally, the information about the second network element may further include service area information (for example, a tracking area identity (tracking area identity, TAI) or a tracking area code (trace area code, TAC)) of the second network element.

Optionally, the information about the second network element may be imported through an interface provided by the third network element (for example, the information about the second network element is imported to the third network element in a manual import manner), or the second network element may send a service registration request message to the third network element, where the service registration request message includes the information about the second network element, so that the third network element can manage the information about the second network element.

Step 902: The third network element sends a service registration/update request message to an eighth network element.

The service registration/update request message may include information about the third network element, for another network element (for example, a network element in a first network or a network element in the second network) to discover the third network element and obtain the information about the third network element.

For example, the information about the third network element may include one or more of the following: identification information of the third network element, address information of the third network element, a DNN/SNN supported by the third network element, a network element identifier of the third network element, a network element type, an IP address/FQDN, port information, a service range (such as a tracking area identity list and a service area identity list), a supported slice, and the like. This is not limited.

Optionally, the information about the third network element may further include information about a second network element served by the third network element.

Optionally, the information about the second network element may include the first identification information, to indicate that the second network element is directly connected to the access network device.

Optionally, in embodiments of this application, the service registration/update request message is used to register with the eighth network element, or add or update the information about the third network element. The service registration/update request message may alternatively be replaced with another name. This is not limited.

Step 903: The eighth network element sends a service registration/update response message to the third network element.

Optionally, the service registration/update response message may alternatively be replaced with another name. This is not limited.

Optionally, when there are a plurality of eighth network elements (for example, an eighth network element #1) in a second network domain, FIG. 9 may further include the following step 904 and step 905.

The eighth network element #1 and the eighth network element may be located at a same level, or may be located at different levels. This is not limited.

For example, a level of the eighth network element #1 is higher than that of the eighth network element. The eighth network element #1 may manage a plurality of eighth network elements, and may open the eighth network element #1 to a large network. The large network may obtain, via the eighth network element #1, topology information stored in all the eighth network elements managed by the eighth network element #1.

Step 904: The eighth network element sends a service registration/update request message to the eighth network element #1.

The service registration/update request message may include information about a third network element associated with (or served by) the eighth network element.

Optionally, the information about the third network element may include the first identification information, to indicate that the second network element is directly connected to the access network device.

Optionally, when sending, to the eighth network element #1, the information about the third network element associated with the eighth network element, the eighth network element may send some information about the third network element, or may send all information about the third network element. This is not limited.

Step 905: The eighth network element #1 sends a service registration/update response message to the eighth network element.

According to the method shown in FIG. 9, the first network element may obtain the first identification information via the eighth network element based on a service discovery process for the third network element.

In a second example, different from sending the first identification information to the third network element via the service registration request message, the second network element may also send the first identification information to the third network element via an association message.

The association message (association message) may also be referred to as an association message.

Optionally, the association message may be an association setup message (association setup message), or may be an association update message (association update message).

For example, the association setup message may be a packet forwarding control protocol (packet forwarding control protocol, PFCP) association setup message, and the association update message may be a PFCP association update message.

In a second possible design, the first network element may send, to the third network element, a message (for example, a session establishment request) used to request to establish the session of the terminal device, and the third network element may send a response message (for example, a session establishment response) to the first network element based on the message, where the response message includes the first identification information.

For example, the first network element may send a session establishment request to the third network element. The third network element may request, based on the session establishment request, the second network element to allocate the first tunnel information for the session of the terminal device. The third network element may send a session establishment response to the first network element. The session establishment response may include the first tunnel information obtained by the third network element, and may further include the first identification information.

In a third possible design, the first network element may obtain the first identification information based on a local configuration, that is, the first identification information may be preconfigured (for example, preconfigured when deployment of the second network is completed).

For example, the first network element may preconfigure the first identification information by storing the first identification information in a local database, a memory, or the like.

According to the foregoing three possible designs, one second network domain may be constructed by one SNO, and one or more second network elements in the second network domain may be directly connected to an access network device, or may not all be directly connected to an access network device. Based on this, when all second network elements in one second network domain are directly connected to an access network device, the first identification information may also indicate that the second network element in the second network domain is directly connected to the access network device. Alternatively, the first identification information may indicate that a second network element served by a third network element is directly connected to the access network device.

The second network domain may be determined based on an SNN (for example, the second network domain is determined based on an operator ID in the SNN), that is, the first identification information indicates that a second network element in the second network domain corresponding to the SNN is directly connected to the access network device.

Based on the foregoing descriptions, the following describes in detail a service discovery process for a network element controlling the second network element with reference to FIG. 6.

FIG. 6 is a diagram of a service discovery procedure for a third network element according to an embodiment of this application. As shown in FIG. 6, the method may include the following steps.

Step 601: A first network element sends a service discovery request #1 to a fourth network element.

The service discovery request #1 may include an SNN, and is used to request a service discovery for a third network element supporting the SNN in a second network domain.

Step 602: The fourth network element sends a service discovery request #2 to an eighth network element #1 in the second network domain.

The fourth network element may support interaction with one or more eighth network elements in the second network domain, in other words, the eighth network element #1 may be an eighth network element that is in the second network domain and that is open to a first network. The eighth network element and the fourth network element may belong to a same operator, or may belong to different operators. This is not limited.

The service discovery request #2 may include the SNN, to request a service discovery for a third network element supporting the SNN in the second network domain.

Optionally, the eighth network element #1 may send information about the third network element supporting the SNN to the fourth network element in a direct returning manner according to the following step 603.

Step 603: If the eighth network element #1 finds that the information about the third network element supporting the SNN is locally stored, the eighth network element #1 sends a service discovery response #2 to the fourth network element.

The service discovery response #2 may include the information about the third network element supporting the SNN.

Alternatively, the eighth network element #1 may send, in a recursive query manner, the information about the third network element supporting the SNN to the fourth network element according to the following step 604 to step 606.

Step 604: The eighth network element #1 finds that no information about the third network element supporting the SNN exists locally, but the eighth network element #2 locally stores the information about the third network element supporting the SNN, and the eighth network element #1 sends a service discovery request #3 to an eighth network element #2.

The service discovery request #3 may include the SNN, to request a service discovery for a third network element supporting the SNN.

Optionally, the eighth network element #1 may obtain, according to step 904 and step 905 in the deployment configuration procedure of the second network shown in FIG. 9, information about a third network element associated with (or served by) the eighth network element #2.

Optionally, when the eighth network element #2 sends, to the eighth network element #1 in the deployment configuration procedure of the second network, some information about the third network element associated with the eighth network element #2, the eighth network element #1 may send a service discovery request to the eighth network element #2 in a service discovery procedure for the third network element, to request a service discovery for the third network element supporting the SNN, and the eighth network element #2 sends, to the eighth network element #1, information (for example, more complete information) about the third network element supporting the SNN.

Step 605: The eighth network element #2 sends a service discovery response #3 to the eighth network element #1.

The service discovery response #3 may include the information about the third network element supporting the SNN.

Step 606: The eighth network element #1 sends the service discovery response #2 to the fourth network element.

The service discovery response #2 may include the information about the third network element supporting the SNN.

Alternatively, the eighth network element #1 may send, in an iterative query manner, the information about the third network element supporting the SNN to the fourth network element according to the following step 607 to step 609.

Step 607: The eighth network element #1 finds that no information about the third network element supporting the SNN exists locally, but the eighth network element #2 locally stores the information about the third network element supporting the SNN, and the eighth network element #1 sends the service discovery response #2 to the fourth network element.

The service discovery response #2 may include identification information of the eighth network element #2 supporting the SNN.

Optionally, the eighth network element #1 may obtain, according to step 904 and step 905 in the deployment configuration procedure of the second network shown in FIG. 9, information about a third network element associated with (or served by) the eighth network element #2.

Optionally, when the eighth network element #2 sends, in the deployment configuration procedure of the second network, some information about the third network element associated with the eighth network element #2 to the eighth network element #1, the eighth network element #1 may send, to the fourth network element in a service discovery procedure for the third network element, the identification information of the eighth network element #2 supporting the SNN, and the fourth network element obtains, from the eighth network element #2 according to the following step 608 and step 609, information (for example, more complete information) about the third network element supporting the SNN.

Step 608: The fourth network element sends a service discovery request #4 to the eighth network element #2.

The eighth network element #2 may be an eighth network element that is in the second network domain and that is open to the first network. The service discovery request #4 may include the SNN, to request a service discovery for a third network element supporting the SNN.

Step 609: The eighth network element #2 sends a service discovery response #4 to the fourth network element.

The service discovery response #4 may include information about the third network element supporting the SNN.

Step 610: The fourth network element sends a service discovery response #1 to the first network element.

The service discovery response #1 may include the information about the third network element supporting the SNN.

Optionally, in embodiments of this application, the service discovery response and the service discovery request may have other message names. This is not limited.

According to the method shown in FIG. 6, the first network element may have service discovery for the third network element in the second network domain across a network domain (from the first network to the second network domain), to resolve a problem of routing unreachability. In addition, a network topology and data of the second network domain are isolated from the first network, to reduce OPEX costs.

Different from the scenarios in which the access network device is directly connected to the second network element in FIG. 5 to FIG. 9, embodiments of this application may also be applied to a scenario in which the access network device is not directly connected to the second network element. As shown in FIG. 10, the first network and the second network may establish a session for the terminal device according to the method shown in FIG. 10.

FIG. 10 shows a communication method according to an embodiment of this application. The method may be applied to a communication scenario in which an access network device is not directly connected to a second network element. As shown in FIG. 10, the method may include the following steps.

Step 1001: A terminal device sends, to a first network element in a first network, a message used to request to establish a session; and correspondingly, the first network element in the first network receives, from the terminal device, the message used to request to establish the session.

For descriptions of step 1001, refer to related descriptions of step 501. Details are not described again.

Step 1002: The first network element obtains third tunnel information, fourth tunnel information, fifth tunnel information, and sixth tunnel information that correspond to the session of the terminal device.

The third tunnel information may be used to send uplink data corresponding to the session of the terminal device to a seventh network element in the first network, the fourth tunnel information may be used to send downlink data corresponding to the session of the terminal device to the seventh network element in the first network, the fifth tunnel information may be used to send data corresponding to the session of the terminal device to a second network element in a second network, and the sixth tunnel information may be used to send data corresponding to the session of the terminal device to an access network device accessed by the terminal device.

The access network device is not directly connected to the second network element.

In a possible design, the first network element may receive the third tunnel information and the fourth tunnel information from the seventh network element.

For example, when determining that the access network device accessed by the terminal device is not directly connected to the second network element, the first network element may send a session establishment request to the seventh network element, to request the seventh network element to allocate two pieces of tunnel information, which are respectively used for data transmission with the access network device and the second network element. The seventh network element may allocate the third tunnel information and the fourth tunnel information based on the session establishment request, use a session establishment response to carry the third tunnel information and the fourth tunnel information, and send the session establishment response to the first network element.

Optionally, the first network element may further send routing domain information of the second network to the seventh network element, where the routing domain information of the second network may include an SNN.

In a possible design, the first network element may receive the fifth tunnel information from a third network element.

The first network element may request, from a fourth network element in the first network, to discover a third network element supporting the SNN in the second network domain, and send, to the third network element, a request (or referred to as a session establishment request) used to request to establish the session for the terminal device.

The session establishment request may include the SNN and session information.

The third network element may send, to the second network element based on the request that is sent by the first network element and that is used to request to establish the session for the terminal device, a message used to request the second network element to allocate tunnel information for the session of the terminal device. The second network element may allocate the fifth tunnel information for the session of the terminal device, and send the fifth tunnel information to the third network element. The third network element sends the fifth tunnel information to the first network element.

In a possible design, the first network element may receive the sixth tunnel information from the access network device.

The access network device may allocate the sixth tunnel information for the session of the terminal device, and send the sixth tunnel information to the first network element.

Optionally, the first network element may send a session establishment request (for example, a PDU session resource setup request (PDU session resource setup request)) to the access network device. The access network device may allocate the sixth tunnel information for the session of the terminal device based on the session establishment request, use a session establishment response to carry the sixth tunnel information, and send the session establishment response to the first network element.

Step 1003: The first network element sends the third tunnel information to the access network device.

Optionally, the first network element may use the session establishment request to carry the third tunnel information and send the session establishment request to the access network device.

Optionally, the first network element may further send identification information of the second network or identification information of the second network domain to the access network device, and the access network device sends data of the terminal device to the second network element in the second network based on first tunnel information and the identification information of the second network/the identification information of the second network domain.

Optionally, the access network device may send data corresponding to the session of the terminal device to the seventh network element based on the third tunnel information.

Step 1004: The first network element sends the fourth tunnel information to the third network element.

Optionally, the first network element may use the session establishment request to carry the fourth tunnel information and send the session establishment request to the third network element, and the third network element may use the session establishment request to carry the fourth tunnel information and send the session establishment request to the second network element.

Alternatively, the first network element may use a session update request to carry the fourth tunnel information and send the session update request to the third network element, and the third network element may use the session update request to carry the fourth tunnel information and send the session update request to the second network element. Optionally, the third network element may further send a session update response to the first network element.

Optionally, the second network element may send data corresponding to the session of the terminal device to the seventh network element based on the fourth tunnel information.

Step 1005: The first network element sends the fifth tunnel information to the seventh network element.

Optionally, the first network element may use a session update request to carry the fifth tunnel information and send the session update request to the seventh network element.

Optionally, the first network element may use the session establishment request to carry the fifth tunnel information and send the session establishment request to the seventh network element.

Optionally, the seventh network element may send data corresponding to the session of the terminal device to the second network element based on the fifth tunnel information.

Step 1006: The first network element sends the sixth tunnel information to the seventh network element.

Optionally, the first network element may use the session update request to carry the sixth tunnel information and send the session update request to the seventh network element.

Optionally, the seventh network element may send, based on the fifth tunnel information, data corresponding to the session of the terminal device to the access network device accessed by the terminal device.

Optionally, an execution sequence of step 1003, step 1004, step 1005, and step 1006 is not limited in this application.

Optionally, step 1005 and step 1006 may also be combined into one step. This is not limited.

According to the method shown in FIG. 10, for terminal devices belonging to different operators, when the terminal device is in a service area of the second network, the terminal device may request the first network element in the first network to establish the session, the seventh network element allocates the fourth tunnel information and the fifth tunnel information for the session of the terminal device, the second network element allocates the fifth tunnel information for the session of the terminal device, and the access network device allocates the sixth tunnel information for the session of the terminal device. In this way, the access network device, the seventh network element, and the second network element implement service data transmission of the terminal device based on the third tunnel information, the fourth tunnel information, the fifth tunnel information, and the sixth tunnel information. In other words, the terminal device in the service area of the second network may access the second network via the first network, and the second network can provide a service for the terminal device that belongs to an operator different from that of the second network.

According to the foregoing descriptions of the scenario in which the access network device is not directly connected to the second network element, the first network element may determine, based on second identification information, that the access network device is not directly connected to the second network element, or the first network element may determine, when first identification information is not obtained, that the access network device is not directly connected to the second network element.

The second identification information may indicate that the access network device is not directly connected to the second network element.

Optionally, the first network element may obtain the second identification information in the foregoing manner of obtaining the first identification information. For example, the first network element obtains the second identification information during service discovery for the third network element; or in a procedure of requesting to establish the session of the terminal device with the third network element, the first network element obtains the second identification information based on a response message sent by the third network element; or the first network element obtains the second identification information based on a local configuration. Details are not described again.

Optionally, that the first network element does not obtain the first identification information may be understood as that the first network element does not obtain the first identification information during service discovery for the third network element; or may be understood as that, in a procedure of requesting to establish the session of the terminal device with the third network element, the first network element does not obtain the first identification information based on a response message sent by the third network element; or may be understood as that the first network element does not obtain the first identification information based on a local configuration.

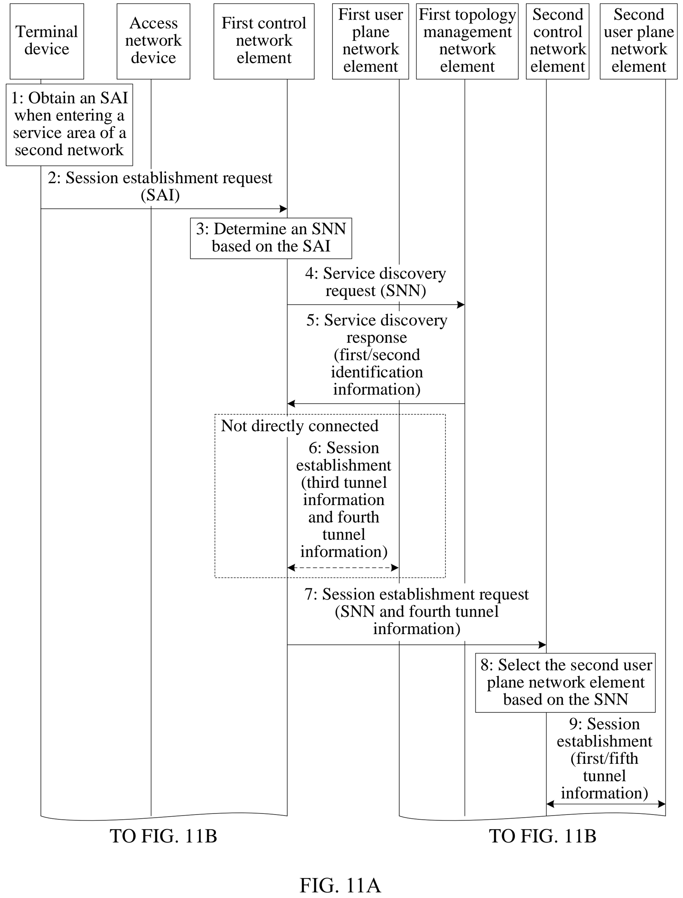

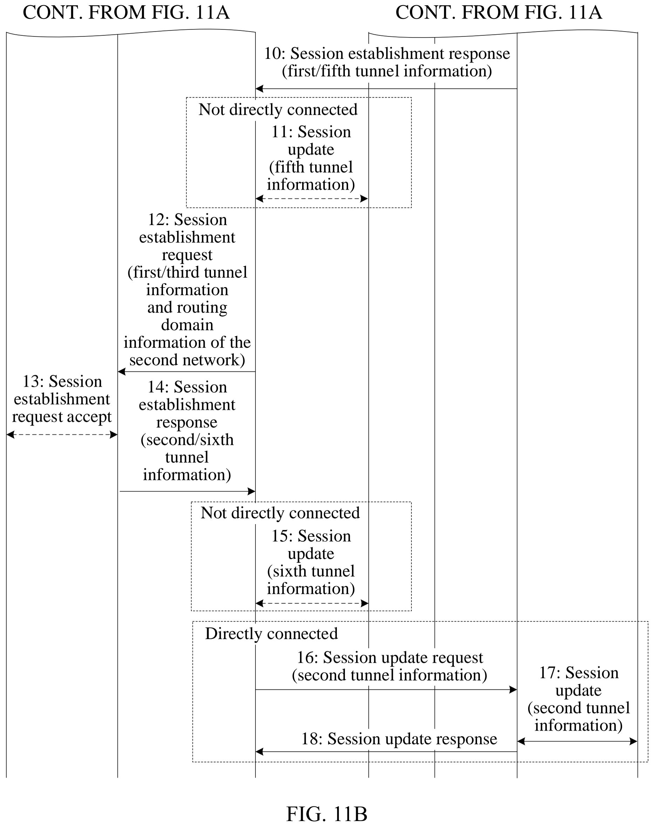

According to the methods shown in FIG. 5 to FIG. 10, with reference to FIG. 11A and FIG. 11B, a session establishment procedure of a terminal device is described by using an example in which the first network element is a first control network element, the seventh network element is a first user plane network element, the fourth network element is a first topology management network element, the third network element is a second control network element, the second network element is a second user plane network element, and the first control network element determines, based on a service discovery process for the second control network element, whether an access network device is directly connected to the second user plane network element.

FIG. 11A and FIG. 11B are a diagram of a session establishment procedure of a terminal device according to an embodiment of this application. As shown in FIG. 11A and FIG. 11B, the method includes the following steps.

Step 1: A terminal device obtains an SAI when entering a service area of a second network.

An access network device located in the service area of the second network may broadcast the SAI in a cell, and the terminal device located in the service area of the second network may obtain the SAI based on the broadcast.

Step 2: The terminal device sends a session establishment request to a first control network element.

The session establishment request may include the SAI.

Step 3: The first control network element requests, based on the SAI, to discover a second control network element supporting an SNN.

The first control network element may determine, from subscription data based on the SAI, an SNN corresponding to the SAI, determine, based on the SNN, that it is the second network domain, and request to discover the second control network element supporting the SNN.

Step 4: The first control network element sends a service discovery request to a first topology management network element.

The service discovery request may include the SNN, to request to discover the second control network element supporting the SNN.

Step 5: The first topology management network element sends a service discovery response to the first control network element.

The service discovery response may include information about the second control network element.

Optionally, the service discovery response may further include first identification information or second identification information, the first identification information indicates that the access network device is directly connected to a second user plane network element, and the second identification information indicates that the access network device is not directly connected to the second user plane network element.

The first control network element and the first topology management network element may have service discovery for the second control network element according to the method shown in FIG. 6. Details are not described again.

If the service discovery response includes the second identification information, the first control network element may determine, based on the second identification information, that the access network device is not directly connected to the second user plane network element, and the first control network element may perform the following step 6. If the service discovery response includes the first identification information, the first control network element may determine, based on the first identification information, that the access network device is directly connected to the second user plane network element, and the first control network element may skip the following step 6 and perform the following step 7.

Step 6: The first control network element requests a first user plane network element to establish a session.

The first control network element may send a session establishment request to the first user plane network element, to request the first user plane network element to allocate two pieces of tunnel information for the session of the terminal device, which are respectively used for data transmission with the access network device and the second user plane network element. The first user plane network element may allocate third tunnel information and fourth tunnel information based on the session establishment request, use a session establishment response to carry the third tunnel information and the fourth tunnel information, and send the session establishment response to the first control network element.

For descriptions of the third tunnel information and the fourth tunnel information, refer to the foregoing related descriptions. Details are not described again.

Step 7: The first control network element sends a session establishment request to the second control network element.

The first control network element may send the session establishment request to the second control network element based on the information about the second control network element.

The session establishment request may include the SNN.

Optionally, if the access network device is not directly connected to the second user plane network element, the first control network element may use the session establishment request to carry the fourth tunnel information allocated by the first user plane network element to the second user plane network element in step 6, and send the session establishment request to the second control network element. If the access network device is directly connected to the second user plane network element, the session establishment request does not include the fourth tunnel information.

Step 8: The second control network element creates a session context, and selects the second user plane network element based on the SNN.

Step 9: The second control network element requests the second user plane network element to establish the session.

The second control network element may send a session establishment request to the second user plane network element, to request the second user plane network element to allocate tunnel information for the session of the terminal device. The second user plane network element may allocate the tunnel information for the session of the terminal device, use a session establishment response to carry the allocated tunnel information, and send the session establishment response to the second control network element.

Optionally, if the access network device is directly connected to the second user plane network element, the second user plane network element may allocate first tunnel information for the session of the terminal device, use a session establishment response to carry the first tunnel information, and send the session establishment response to the second control network element.

For descriptions of the first tunnel information, refer to the foregoing related descriptions. Details are not described again.

Optionally, if the access network device is not directly connected to the second user plane network element, the second user plane network element may allocate fifth tunnel information for the session of the terminal device, use a session establishment response to carry the fifth tunnel information, and send the session establishment response to the second control network element.

For descriptions of the fifth tunnel information, refer to the foregoing related descriptions. Details are not described again.

Optionally, if the access network device is not directly connected to the second user plane network element, the session establishment request sent by the second control network element to the second user plane network element may include the fourth tunnel information, and the second user plane network element may subsequently send data corresponding to the session of the terminal device to the first user plane network element based on the fourth tunnel information.

Step 10: The second control network element sends a session establishment response to the first control network element.

If the access network device is directly connected to the second user plane network element, the session establishment response may include the first tunnel information. If the access network device is not directly connected to the second user plane network element, the session establishment response may include the fifth tunnel information.

If the access network device is not directly connected to the second user plane network element, the first control network element may perform the following step 11. If the access network device is directly connected to the second user plane network element, the first control network element may skip the following step 11 and perform the following step 12.

Step 11: The first control network element requests the first user plane network element to update the session.

If the access network device is not directly connected to the second user plane network element, the first control network element may use a session update request to carry the fifth tunnel information and send the session update request to the first user plane network element. The first user plane network element updates the session based on the session update request, and sends a session update response to the first control network element.

The first user plane network element may obtain the fifth tunnel information based on the session update request, so that data corresponding to the session of the terminal device can be subsequently sent to the second user plane network element based on the fifth tunnel information.

Step 12: The first control network element sends a session establishment request to the access network device.

If the access network device is directly connected to the second user plane network element, the session establishment request may include the first tunnel information, so that the access network device subsequently sends data corresponding to the session of the terminal device to the second user plane network element based on the first tunnel information.

If the access network device is not directly connected to the second user plane network element, the session establishment request may include the third tunnel information, so that the access network device subsequently sends data corresponding to the session of the terminal device to the first user plane network element based on the third tunnel information.

Optionally, the session establishment request may further include routing domain information of the second network.

Step 13: The access network device sends a session establishment request accept to the terminal device.

Step 14: The access network device sends a session establishment response to the first control network element.

The access network device may allocate tunnel information for the session of the terminal device based on the session establishment request, use the session establishment response to carry the allocated tunnel information, and send the session establishment response to the first control network element.

Optionally, if the access network device is directly connected to the second user plane network element, the session establishment response may include second tunnel information.

For descriptions of the second tunnel information, refer to the foregoing related descriptions. Details are not described again.

Optionally, if the access network device is not directly connected to the second user plane network element, the session establishment response may include sixth tunnel information.

For descriptions of the sixth tunnel information, refer to the foregoing related descriptions. Details are not described again.

If the access network device is not directly connected to the second user plane network element, the first control network element may perform the following step 15. If the access network device is directly connected to the second user plane network element, the first control network element may perform the following step 16 to step 18.

Step 15: The first control network element requests the first user plane network element to update the session.

If the access network device is not directly connected to the second user plane network element, the first control network element may use a session update request to carry the sixth tunnel information and send the session update request to the first user plane network element. The first user plane network element updates the session based on the session update request, and sends a session update response to the first control network element.

The first user plane network element may obtain the sixth tunnel information based on the session update request, so that data corresponding to the session of the terminal device can be subsequently sent to the access network device based on the sixth tunnel information.

Step 16: The first control network element sends a session update request to the second control network element.

If the access network device is directly connected to the second user plane network element, the session update request may include the second tunnel information.

Step 17: The second control network element requests the second user plane network element to update the session.

The second control network element may use a session update request to carry the second tunnel information and send the session update request to the second user plane network element. The second user plane network element updates the session based on the session update request, and sends a session update response to the second control network element.

The second user plane network element may obtain the second tunnel information based on the session update request, so that data corresponding to the session of the terminal device can be subsequently sent to the access network device based on the second tunnel information.

Step 18: The second control network element sends a session update response to the first control network element.

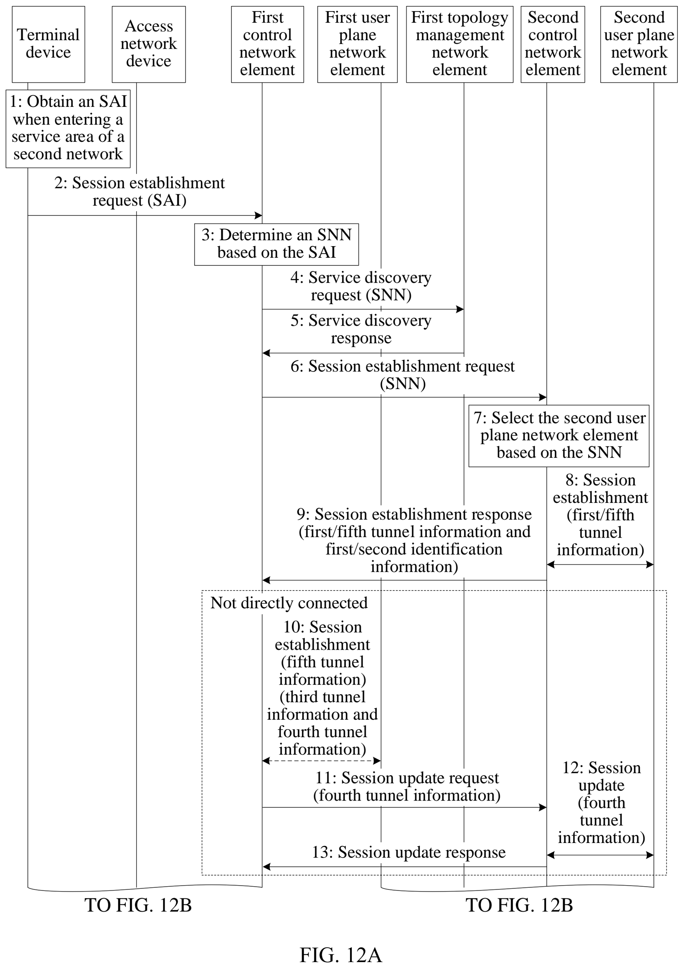

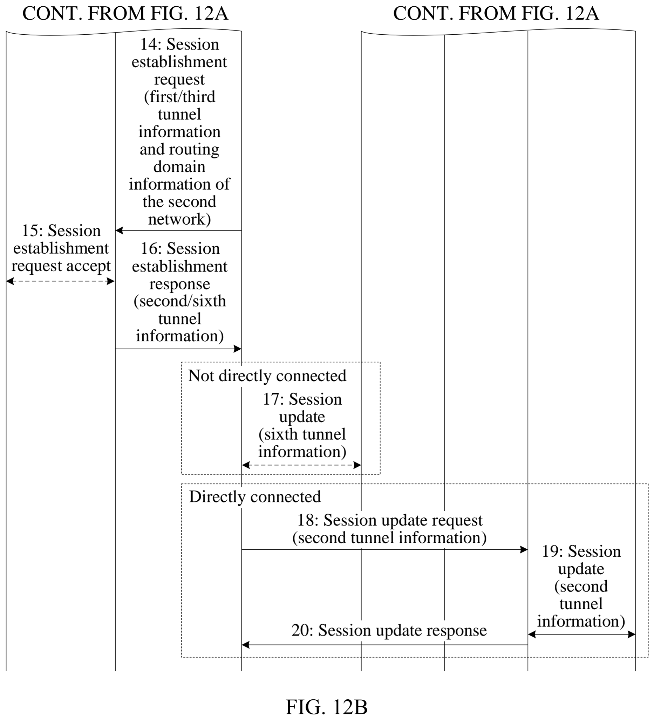

Different from FIG. 11A and FIG. 11B in which the first control network element determines, based on the service discovery process for the second control network element, whether the access network device is directly connected to the second user plane network element, in FIG. 12A and FIG. 12B, the first control network element may also determine, based on the session establishment process, whether the access network device is directly connected to the second user plane network element.

FIG. 12A and FIG. 12B are a diagram of a session establishment procedure of a terminal device according to an embodiment of this application. As shown in FIG. 12A and FIG. 12B, the method includes the following steps.

Step 1: A terminal device obtains an SAI when entering a service area of a second network.

Step 2: The terminal device sends a session establishment request to a first control network element.

Step 3: The first control network element requests, based on the SAI, to discover a second control network element supporting an SNN.

Step 4: The first control network element sends a service discovery request to a first topology management network element.

For descriptions of step 1 to step 4, refer to the descriptions of step 1 to step 4 in FIG. 11A and FIG. 11B. Details are not described again.

Step 5: The first topology management network element sends a service discovery response to the first control network element.

The service discovery response may include information about the second control network element.

Step 6: The first control network element sends a session establishment request to the second control network element.

The first control network element may send the session establishment request to the second control network element based on the information about the second control network element.

The session establishment request may include the SNN.

Step 7: The second control network element creates a session context, and selects a second user plane network element based on the SNN.

Step 8: The second control network element requests the second user plane network element to establish a session.

The second control network element may send a session establishment request to the second user plane network element, to request the second user plane network element to allocate tunnel information for the session of the terminal device. The second user plane network element may allocate the tunnel information for the session of the terminal device, use a session establishment response to carry the allocated tunnel information, and send the session establishment response to the second control network element.

Optionally, if an access network device is directly connected to the second user plane network element, the second user plane network element may allocate first tunnel information for the session of the terminal device, use a session establishment response to carry the first tunnel information, and send the session establishment response to the second control network element.

For descriptions of the first tunnel information, refer to the foregoing related descriptions. Details are not described again.

Optionally, if an access network device is not directly connected to the second user plane network element, the second user plane network element may allocate fifth tunnel information for the session of the terminal device, use a session establishment response to carry the fifth tunnel information, and send the session establishment response to the second control network element.

For descriptions of the fifth tunnel information, refer to the foregoing related descriptions. Details are not described again.

Step 9: The second control network element sends a session establishment response to the first control network element.

The session establishment response may include first identification information or second identification information, the first identification information indicates that the access network device is directly connected to the terminal device, and the second identification information indicates that the access network device is not directly connected to the terminal device.

If the access network device is directly connected to the second user plane network element, the session establishment response may include the first tunnel information. If the access network device is not directly connected to the second user plane network element, the session establishment response may include the fifth tunnel information.

If the session establishment response includes the second identification information, the first control network element may determine, based on the second identification information, that the access network device is not directly connected to the second user plane network element, and the first control network element may perform the following step 10 to step 13. If the session establishment response includes the first identification information, the first control network element may determine, based on the first identification information, that the access network device is directly connected to the second user plane network element, and the first control network element may skip the following step 10 to step 13, and perform the following step 14.

Step 10: The first control network element requests a first user plane network element to establish the session.

If the access network device is not directly connected to the second user plane network element, the first control network element may send a session establishment request to the first user plane network element, to request the first user plane network element to allocate two pieces of tunnel information for the session of the terminal device, which are respectively used for data transmission with the access network device and the second user plane network element. The first user plane network element may allocate third tunnel information and fourth tunnel information based on the session establishment request, use a session establishment response to carry the third tunnel information and the fourth tunnel information, and send the session establishment response to the first control network element.

For descriptions of the third tunnel information and the fourth tunnel information, refer to the foregoing related descriptions. Details are not described again.

Optionally, the first control network element may further use the session establishment request to carry the fifth tunnel information, and send the session establishment request to the first user plane network element, so that the first user plane network element subsequently sends data corresponding to the session of the terminal device to the second user plane network element based on the fifth tunnel information.

Step 11: The first control network element sends a session update request to the second control network element.

If the access network device is not directly connected to the second user plane network element, the session update request may include the fourth tunnel information.

Step 12: The second control network element requests the second user plane network element to update the session.

The second control network element may use a session update request to carry the fourth tunnel information and send the session update request to the second user plane network element. The second user plane network element updates the session based on the session update request, and sends a session update response to the second control network element.

The second user plane network element may obtain the fourth tunnel information based on the session update request, so that data corresponding to the session of the terminal device can be subsequently sent to the first user plane network element based on the fourth tunnel information.

Step 13: The second control network element sends a session update response to the first control network element.

Step 14: The first control network element sends a session establishment request to the access network device.

If the access network device is directly connected to the second user plane network element, the session establishment request may include the first tunnel information, so that the access network device subsequently sends data corresponding to the session of the terminal device to the second user plane network element based on the first tunnel information.

If the access network device is not directly connected to the second user plane network element, the session establishment request may include the third tunnel information, so that the access network device subsequently sends data corresponding to the session of the terminal device to the first user plane network element based on the third tunnel information.

Optionally, the session establishment request may further include routing domain information of the second network.

Step 15: The access network device sends a session establishment request accept to the terminal device.

Step 16: The access network device sends a session establishment response to the first control network element.

The access network device may allocate tunnel information for the session of the terminal device based on the session establishment request, use the session establishment response to carry the allocated tunnel information, and send the session establishment response to the first control network element.

Optionally, if the access network device is directly connected to the second user plane network element, the session establishment response may include second tunnel information.

Optionally, if the access network device is not directly connected to the second user plane network element, the session establishment response may include sixth tunnel information.

If the access network device is not directly connected to the second user plane network element, the first control network element may perform the following step 17. If the access network device is directly connected to the second user plane network element, the first control network element may perform the following step 18 to step 20.

Step 17: The first control network element requests the first user plane network element to update the session.

If the access network device is not directly connected to the second user plane network element, the first control network element may use a session update request to carry the sixth tunnel information and send the session update request to the first user plane network element. The first user plane network element updates the session based on the session update request, and sends a session update response to the first control network element.

The first user plane network element may obtain the sixth tunnel information based on the session update request, so that data corresponding to the session of the terminal device can be subsequently sent to the access network device based on the sixth tunnel information.

Step 18: The first control network element sends a session update request to the second control network element.

If the access network device is directly connected to the second user plane network element, the session update request may include the second tunnel information.

Step 19: The second control network element requests the second user plane network element to update the session.

The second control network element may use a session update request to carry the second tunnel information and send the session update request to the second user plane network element. The second user plane network element updates the session based on the session update request, and sends a session update response to the second control network element.

The second user plane network element may obtain the second tunnel information based on the session update request, so that data corresponding to the session of the terminal device can be subsequently sent to the access network device based on the second tunnel information.

Step 20: The second control network element sends a session update response to the first control network element.

It should be noted that embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined into a new embodiment based on an internal logical relationship thereof.

In embodiments of this application, it may be understood that an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

The foregoing mainly describes the solutions provided in embodiments of this application from a perspective of interaction between devices. It may be understood that, to implement the foregoing functions, each device includes a corresponding hardware structure and/or a corresponding software module for performing each function. A person of ordinary skill in the conventional technology should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the conventional technology may use different methods to implement the described functions for each particular application, but it should not be considered that the implementation goes beyond the scope of this application.

In embodiments of this application, the devices may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

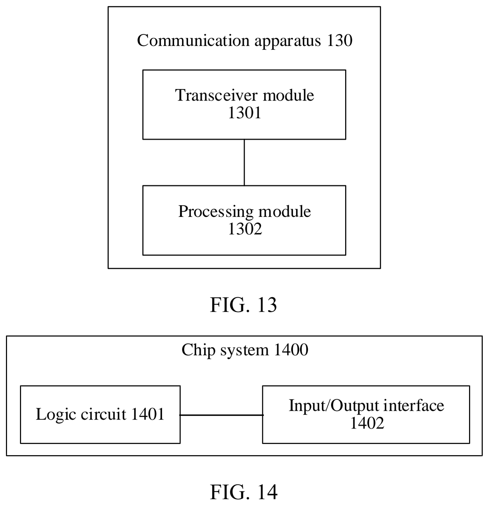

When each function module is obtained through division based on each corresponding function, FIG. 13 shows a communication apparatus 130. The communication apparatus 130 may perform actions performed by the terminal device, the first network element, the seventh network element, the fourth network element, the third network element, the second network element, the eighth network element, or the access network device in the methods shown in FIG. 7 to FIG. 12A and FIG. 12B. All related content of the steps in the foregoing method embodiments may be referenced to function descriptions of corresponding function modules. For a technical effect that can be achieved by the method, refer to the foregoing method embodiment. Details are not described herein again.

The communication apparatus 130 may include a transceiver module 1301 and a processing module 1302. For example, the communication apparatus 130 may be a communication device, or may be a chip used in the communication device, or another combined device or component that has a function of the communication apparatus. When the communication apparatus 130 is a communication device, the transceiver module 1301 may be a transceiver, where the transceiver may include an antenna, a radio frequency circuit, and the like; and the processing module 1302 may be a processor (or a processing circuit), for example, a baseband processor, where the baseband processor may include one or more CPUs. When the communication apparatus 130 is a component that has a function of the communication apparatus, the transceiver module 1301 may be a radio frequency unit, and the processing module 1302 may be a processor (or a processing circuit), for example, a baseband processor. When the communication apparatus 130 is a chip system, the transceiver module 1301 may be an input/output interface of a chip (for example, a baseband chip), and the processing module 1302 may be a processor (or a processing circuit) of the chip system and may include one or more central processing units. It should be understood that the transceiver module 1301 in embodiments of this application may be implemented by the transceiver or a transceiver-related circuit component, and the processing module 1302 may be implemented by the processor or a processor-related circuit component (or referred to as a processing circuit).

For example, the transceiver module 1301 may be configured to perform all receiving and sending operations performed by the communication apparatus in embodiments shown in FIG. 7 to FIG. 12A and FIG. 12B, and/or configured to support another process of the technology described in this specification. The processing module 1302 may be configured to perform all operations, other than the receiving and sending operations, performed by the communication apparatus in embodiments shown in FIG. 7 to FIG. 12A and FIG. 12B, and/or configured to support another process of the technology described in this specification.

In another possible implementation, the transceiver module 1301 in FIG. 13 may be replaced with a transceiver, and a function of the transceiver module 1301 may be integrated into the transceiver. The processing module 1302 may be replaced with a processor, and a function of the processing module 1302 may be integrated into the processor. Further, the communication apparatus 130 shown in FIG. 13 may further include a memory.

Optionally, as shown in FIG. 14, an embodiment of this application further provides a diagram of a chip system 1400. The chip system 1400 (or may be referred to as a processing system) includes a logic circuit 1401 and an input/output interface (input/output interface) 1402.

The logic circuit 1401 may be a processing circuit in the chip system 1400. The logic circuit 1401 may be coupled and connected to a storage unit, and invoke instructions in the storage unit, so that the chip system 1400 can implement the methods and the functions in embodiments of this application. The input/output interface 1402 may be an input/output circuit in the chip system 1400, and outputs information processed by the chip system 1400, or inputs to-be-processed data or signaling information to the chip system 1400 for processing.

In a solution, the chip system 1400 is configured to implement operations performed by the terminal device, the first network element, the seventh network element, the fourth network element, the third network element, the second network element, the eighth network element, or the access network device in the foregoing method embodiments.

For example, the logic circuit 1401 is configured to implement processing-related operations performed by the terminal device, the first network element, the seventh network element, the fourth network element, the third network element, the second network element, the eighth network element, or the access network device in the foregoing method embodiments. The input/output interface 1402 is configured to implement sending and/or receiving-related operations performed by the terminal device, the first network element, the seventh network element, the fourth network element, the third network element, the second network element, the eighth network element, or the access network device in the foregoing method embodiments.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit in the terminal in any one of the foregoing embodiments (including a data transmit end and/or a data receive end), for example, a hard disk or memory of the terminal. The foregoing computer-readable storage medium may also be an external storage device of the foregoing terminal, for example, a plug-in hard disk, a smart memory card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular sequence. The terms "first" and "second" are intended only for description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including", "having", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more. "A plurality of" means two or more than two. "At least two (items)" means two, three, or more than three. "And/or" is used to describe an association relationship between associated objects, and indicates that three relationships may exist. For example, "A and/or B" may indicate three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the term "example" or "for example" is intended to present a related concept in a specific manner for ease of understanding.

In this application, "sending information to ... (a terminal device)" may be understood as that a destination end of the information is the terminal device, and may include directly or indirectly sending the information to the terminal device. "Receiving information from... (a terminal device)" may be understood as that a source end of the information is the terminal device, and may include directly or indirectly receiving the information from the terminal device. Information may undergo necessary processing, for example, a format change, between the source end for sending the information and the destination end. However, the destination end may understand valid information from the source end.

The foregoing descriptions about implementations allow a person skilled in the conventional technology to understand that, for the purpose of convenient and brief description, division into the foregoing function modules is only used as an example for description. During actual application, the foregoing functions can be allocated to different function modules for implementation according to a requirement, that is, an inner structure of an apparatus is divided into different function modules to complete all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one position, or may be distributed in different positions. Some or all of the units may be selected according to actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such understanding, the technical solutions of embodiments of this application essentially or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, wherein the method is applied to a first network element in a first network, and the method comprises:
receiving, from a terminal device, a message used to request to establish a session, wherein the terminal device is located in a service area of a second network, an operator to which the terminal device belongs is the same as an operator to which the first network belongs, and the second network provides a service for a terminal device of one or more operators;
obtaining first tunnel information and second tunnel information that correspond to the session of the terminal device, wherein the first tunnel information is used to send data corresponding to the session to a second network element in the second network, the second tunnel information is used to send data corresponding to the session to an access network device accessed by the terminal device, and the access network device is directly connected to the second network element;
sending the first tunnel information to the access network device; and
sending the second tunnel information to a third network element in the second network, wherein the third network element is configured to control the second network element.

2. The method according to claim 1, wherein
the obtaining the first tunnel information that corresponds to the session of the terminal device comprises:
receiving the first tunnel information from the third network element; and/or
the obtaining the second tunnel information that corresponds to the session of the terminal device comprises:
receiving the second tunnel information from the access network device.

3. The method according to claim 1 or 2, wherein before sending the first tunnel information to the access network device and sending the second tunnel information to the third network element in the second network, the method further comprises:
obtaining first identification information, wherein the first identification information indicates that the access network device is directly connected to the second network element.

4. The method according to claim 3, wherein the obtaining the first identification information comprises:
requesting a fourth network element in the first network to discover the third network element, wherein the fourth network element is configured to manage topology information of the first network; and
receiving information about the third network element and the first identification information from the fourth network element; and
the sending the second tunnel information to the third network element in the second network comprises:
sending the second tunnel information to the third network element based on the information about the third network element.

5. The method according to claim 3, wherein the obtaining the first identification information comprises:
sending, to the third network element, a message used to request to establish the session of the terminal device, and receiving a response message from the third network element, wherein the response message comprises the first identification information; or
obtaining the first identification information based on a local configuration.

6. The method according to any one of claims 1 to 5, wherein
the operator to which the first network belongs is the same as or different from an operator to which the second network belongs.

7. A communication method, wherein the method is applied to a second network element in a second network, and the method comprises:
receiving, from a third network element, a message used to request the second network element to allocate tunnel information for a session of a terminal device, wherein the third network element belongs to the second network, the terminal device is located in a service area of the second network, and the second network provides a service for a terminal device of one or more operators;
allocating first tunnel information for the session of the terminal device, wherein the first tunnel information is used to send data corresponding to the session of the terminal device to the second network element;
sending the first tunnel information to the third network element;
receiving second tunnel information from the third network element; and
sending, based on the second tunnel information, data corresponding to the session to an access network device accessed by the terminal device, wherein the access network device is directly connected to the second network element.

8. The method according to claim 7, wherein the method further comprises:
sending first identification information to the third network element, wherein the first identification information indicates that the access network device is directly connected to the second network element.

9. The method according to claim 8, wherein the sending the first identification information to the third network element comprises:
sending the first identification information to the third network element via a first message, wherein the first message is a service registration request message or an association message.

10. A communication method, comprising:
sending, by a third network element to a second network element, a message used to request the second network element to allocate tunnel information for a session of a terminal device, wherein the third network element and the second network element belong to a second network, the terminal device is located in a service area of the second network, and the second network provides a service for a terminal device of one or more operators;
allocating, by the second network element, first tunnel information for the session of the terminal device, and sending the first tunnel information to the third network element, wherein the first tunnel information is used to send data corresponding to the session of the terminal device to the second network element;
sending, by the third network element, second tunnel information to the second network element; and
sending, by the second network element based on the second tunnel information, data corresponding to the session to an access network device accessed by the terminal device, wherein the access network device is directly connected to the second network element.

11. The method according to claim 10, wherein the method further comprises:
sending, by a first network element in a first network, the second tunnel information to the third network element; and
sending, by the third network element, the first tunnel information to the first network element, wherein
an operator to which the terminal device belongs is the same as an operator to which the first network belongs.

12. The method according to claim 10 or 11, wherein the method further comprises:
allocating, by the access network device, the second tunnel information for the session of the terminal device, and sending the second tunnel information to the first network element in the first network, wherein the operator to which the terminal device belongs is the same as the operator to which the first network belongs;
sending, by the first network element, the first tunnel information to the access network device; and
sending, by the access network device based on the first tunnel information, data corresponding to the session of the terminal device.

13. A communication apparatus, wherein the communication apparatus belongs to a first network, and the communication apparatus comprises:
a transceiver module, configured to receive, from a terminal device, a message used to request to establish a session, wherein the terminal device is located in a service area of a second network, an operator to which the terminal device belongs is the same as an operator to which the first network belongs, and the second network provides a service for a terminal device of one or more operators; and
a processing module, configured to obtain first tunnel information and second tunnel information that correspond to the session of the terminal device, wherein the first tunnel information is used to send data corresponding to the session to a second network element in the second network, the second tunnel information is used to send data corresponding to the session to an access network device accessed by the terminal device, and the access network device is directly connected to the second network element, wherein
the transceiver module is further configured to send the first tunnel information to the access network device; and
the transceiver module is further configured to send the second tunnel information to a third network element in the second network, wherein the third network element is configured to control the second network element.

14. The apparatus according to claim 13, wherein
the transceiver module is specifically configured to receive the first tunnel information from the third network element; and/or
the transceiver module is specifically configured to receive the second tunnel information from the access network device.

15. The apparatus according to claim 13 or 14, wherein
the processing module is further configured to: before the transceiver module sends the first tunnel information to the access network device and sends the second tunnel information to the third network element in the second network, obtain first identification information, wherein the first identification information indicates that the access network device is directly connected to the second network element.

16. The apparatus according to claim 15, wherein
the processing module is specifically configured to request, via the transceiver module, a fourth network element in the first network to discover the third network element, and receive, via the transceiver module, information about the third network element and the first identification information from the fourth network element, wherein the fourth network element is configured to manage topology information of the first network; and
the processing module is further configured to send the second tunnel information to the third network element based on the information about the third network element via the transceiver module.

17. The apparatus according to claim 15, wherein
the processing module is specifically configured to send, to the third network element via the transceiver module, a message used to request to establish the session of the terminal device, and receive a response message from the third network element via the transceiver module, wherein the response message comprises the first identification information; or
the processing module is specifically configured to obtain the first identification information based on a local configuration.

18. The apparatus according to any one of claims 13 to 17, wherein
the operator to which the first network belongs is the same as or different from an operator to which the second network belongs.

19. A communication apparatus, wherein the communication apparatus belongs to a second network, and the communication apparatus comprises:
a transceiver module, configured to receive, from a third network element, a message used to request the communication apparatus to allocate tunnel information for a session of a terminal device, wherein the third network element belongs to the second network, the terminal device is located in a service area of the second network, and the second network provides a service for a terminal device of one or more operators; and
a processing module, configured to allocate first tunnel information for the session of the terminal device, wherein the first tunnel information is used to send data corresponding to the session of the terminal device to the communication apparatus, wherein
the transceiver module is further configured to send the first tunnel information to the third network element;
the transceiver module is further configured to receive second tunnel information from the third network element; and
the transceiver module is further configured to send, based on the second tunnel information, data corresponding to the session to an access network device accessed by the terminal device, wherein the access network device is directly connected to the communication apparatus.

20. The apparatus according to claim 19, wherein
the transceiver module is further configured to send first identification information to the third network element, wherein the first identification information indicates that the access network device is directly connected to the communication apparatus.

21. The apparatus according to claim 20, wherein
the transceiver module is specifically configured to send the first identification information to the third network element via a first message, wherein the first message is a service registration request message or an association message.

22. A communication apparatus, wherein the communication apparatus comprises a processor, and the processor is configured to run a computer program or instructions, to enable the communication apparatus to perform the communication method according to any one of claims 1 to 6, or perform the communication method according to any one of claims 7 to 9.

23. A computer-readable storage medium, wherein the computer-readable storage medium stores computer instructions or a program, and when the computer instructions or the program is run on a computer, the communication method according to any one of claims 1 to 6 is performed, or the communication method according to any one of claims 7 to 9 is performed.

24. A computer program product, wherein the computer program product comprises computer instructions, and when some or all of the computer instructions are run on a computer, the communication method according to any one of claims 1 to 6 is performed, or the communication method according to any one of claims 7 to 9 is performed.

25. A communication system, comprising a third network element in a second network and the communication apparatus according to any one of claims 19 to 21, wherein
the third network element is configured to send, to the communication apparatus, a message used to request the communication apparatus to allocate tunnel information for a session of a terminal device, and receive first tunnel information allocated by the communication apparatus; and is further configured to send second tunnel information to the communication apparatus.

26. The system according to claim 25, wherein the communication system further comprises the communication apparatus according to any one of claims 13 to 18.
